(19) **Europäisches Patentamt / European Patent Office / Office européen des brevets**

(11) **EP 4 350 566 B1**

(12) **EUROPEAN PATENT SPECIFICATION**

(45) Date of publication and mention of the grant of the patent:
**04.03.2026 Bulletin 2026/10**

(21) Application number: **23200758.3**

(22) Date of filing: **29.09.2023**

(51) International Patent Classification (IPC):
*G06F 30/17* (2020.01)    *G06T 17/10* (2006.01)
*G06F 30/23* (2020.01)    *G06F 111/04* (2020.01)
*G06F 113/10* (2020.01)

(52) Cooperative Patent Classification (CPC):
**G06F 30/17; G06F 30/23;** G06F 2111/04;
G06F 2113/10

(54) **COMPUTER AIDED SHAPE SYNTHESIS WITH CONNECTIVITY FILTERING**

COMPUTERGESTÜTZTE FORMSYNTHESE MIT KONNEKTIVITÄTSFILTERUNG

SYNTHÈSE DE FORME ASSISTÉE PAR ORDINATEUR AVEC FILTRAGE DE CONNECTIVITÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.10.2022 US 202263412843 P**
            **30.08.2023 US 202318240185**

(43) Date of publication of application:
**10.04.2024 Bulletin 2024/15**

(60) Divisional application:
**25193171.3 / 4 617 942**

(73) Proprietor: **Autodesk, Inc.**
**San Francisco, CA 94105 (US)**

(72) Inventors:
• **BURLA, Ravi Kumar**
  **Novi, 48374 (US)**
• **LIANG, Lihao**
  **Portland, 97214 (US)**
• **WEISS, Benjamin McKittrick**
  **Tualatin, 97062 (US)**

• **MORRISON, Andrew Allan**
  **Gillette, 82716 (US)**

(74) Representative: **Fish & Richardson P.C.**
**Highlight Business Towers**
**Mies-van-der-Rohe-Straße 8**
**80807 München (DE)**

(56) References cited:
**US-A1- 2012 078 585**

• **GE YIN ET AL: "Topologically robust CAD model generation for structural optimisation", ARXIV.ORG, CORNELL UNIVERSITY LIBRARY, 201 OLIN LIBRARY CORNELL UNIVERSITY ITHACA, NY 14853, 9 June 2020 (2020-06-09), XP081679355**
• **SCHMITT OLIVER ET AL: "Control of minimum member size in parameter-free structural shape optimization by a medial axis approximation", COMPUTATIONAL MECHANICS, SPRINGER, BERLIN, DE, vol. 61, no. 6, 14 September 2017 (2017-09-14), pages 717 - 727, XP036513190, ISSN: 0178-7675, [retrieved on 20170914], DOI: 10.1007/S00466-017-1477-1**

**Description**

BACKGROUND

This specification relates to computer aided design of physical structures, which can be manufactured using additive manufacturing, subtractive manufacturing and/or other manufacturing systems and techniques, or other structures, which can be provided as a digital asset, such as for use in animation.

Computer Aided Design (CAD) software has been developed and used to generate three-dimensional (3D) representations of objects, and Computer Aided Manufacturing (CAM) software has been developed and used to evaluate, plan and control the manufacture of the physical structures of those objects, e.g., using Computer Numerical Control (CNC) manufacturing techniques. Typically, CAD software stores the 3D representations of the geometry of the objects being modeled using a boundary representation (B-Rep) format. A B-Rep model is a set of connected surface elements specifying boundaries between a solid portion and a non-solid portion of the modeled 3D object. In a B-Rep model (often referred to as a B-Rep), geometry is stored in the computer using smooth and precise mathematical surfaces, in contrast to the discrete and approximate surfaces of a mesh model, which can be difficult to work with in a CAD program.

CAD programs have been used in conjunction with subtractive manufacturing systems and techniques. Subtractive manufacturing refers to any manufacturing process where 3D objects are created from stock material (generally a "blank" or "workpiece" that is larger than the 3D object) by cutting away portions of the stock material. Such manufacturing processes typically involve the use of multiple CNC machine cutting tools in a series of operations, starting with a roughing operation, an optional semi-finishing operation, and a finishing operation. In addition to CNC machining, other subtractive manufacturing techniques include electrode discharge machining, chemical machining, waterjet machining, etc. In contrast, additive manufacturing, also known as solid free form fabrication or 3D printing, refers to any manufacturing process where 3D objects are built up from raw material (generally powders, liquids, suspensions, or molten solids) in a series of layers or cross-sections. Examples of additive manufacturing include Fused Filament Fabrication (FFF) and Selective Laser Sintering (SLS). Other manufacturing techniques for building 3D objects from raw materials include casting and forging (both hot and cold) and molding.

In addition, CAD software has been designed to perform automatic generation of 3D geometry of one or more parts in a design (known as "topology optimization", "generative design", or "generative modelling", among others). This automated generation of 3D geometry often works within a "design domain" specified by a user or the CAD software and generates geometry typically by optimizing design objectives and respecting design constraints, which can be defined by the user, CAD software, or a third party. The design objectives can include but are not limited to minimizing waste material, minimizing the weight of the part, and minimizing the compliance, stress, maximum mass, maximum deflection under load, or other intrinsic property of the part, and are used to drive the shape synthesis process towards better designs. Though not required, it is typical for a design objective to be rooted in a simulation of the design (linear static, fluid dynamic, electromagnetic, etc.). Design constraints can include a variety of physical characteristics or behaviors that must be met in any generated design (requirements, either on individual parts or on the entire assembly, are also admissible); examples include maximum mass, maximum deflection under load, maximum stress, etc.

Geometric constraints may also be provided, for example to ensure the generated shape has no tiny features or is more easily realized using a particular manufacturing process. Further, the geometric inputs to such a 3D geometry generation tool can include one or more user- or CAD system- provided "preserve bodies" (indicating volumetric regions of the design space that should be filled in with material in a final design) or "preserve faces" (indicating interfaces between the design space and an adjacent component that should be contacted by the generated 3D geometry) which should always be present in the design. The "preserve bodies" or "preserve faces" can represent interfaces to other parts of the systems or locations on which boundary conditions should be applied (for example, mechanical loads and constraints). Other regions in which geometry should or should not be generated can also be provided in a similar manner (e.g., "obstacle bodies" used to indicate where geometry should not be created). In some cases, the shape synthesis process takes place using a different representation of geometry than that employed by the CAD system. For example, a CAD system might use a boundary representation ("B-Rep") while the geometry generation engine might employ a level set function embedded in a voxel or tetrahedral mesh. Document XP081679355 represents relevant prior art.

SUMMARY

The invention is defined by the claims.

This specification describes technologies relating to computer aided design of structures with connectivity filtering during shape synthesis, e.g., during automated design of physical structures using generative design processes. The systems and techniques described can be used with computer aided design of two-dimensional (2D) or three-dimensional (3D) geometry when two or more regions of a shape should be, or should remain, connected with each other. Also, while the present disclosure focuses on 3D level set topology optimization, the systems and techniques described are applicable in other technical fields of endeavor, including for assessing the connectivity of a design, or as a standalone geometry synthesis method, e.g., to create a starting shape for use in shape and/or topology optimization. Other applications include generation of conceptual work or digital-only assets, such as for use in animation.

In general, one or more aspects of the subject matter described in this specification can be embodied in one or more methods (and also one or more non-transitory computer-readable mediums tangibly encoding a computer program operable to cause data processing apparatus to perform operations), including: obtaining, by a shape modeling computer program, two or more specified regions of geometry defined in a data structure used by the shape modeling computer program; identifying, by the shape modeling computer program, at least one path between the two or more specified regions, wherein the at least one path corresponds to one or more required regions that must be included in the geometry to ensure connection between at least two of the two or more specified regions of the geometry; and producing, by the shape modeling computer program, new geometry defined in the data structure for the one or more required regions, the new geometry produced using the at least one path.

The two or more specified regions can be two or more preserve bodies, the two or more preserve bodies and at least one obstacle body can be specified for the geometry, and the producing can involve generating the new geometry based on the two or more preserve bodies, the at least one path, and the at least one obstacle body. The producing can include: performing the identifying in each of multiple iterations of an optimization loop; varying a shape of a modeled object in each of the multiple iterations of the optimization loop, including limiting thickness reduction of the shape in at least a portion of the one or more required regions along the at least one path; and outputting the shape of the modeled object to produce at least the new geometry defined in the data structure.

The shape of the modeled object can include a level-set representation of an implicit surface of the modeled object, the producing can include adjusting data values of the at least one path in each of the multiple iterations of the optimization loop to produce adjusted data values for the at least one path, limiting the thickness reduction of the shape can include using the adjusted data values to limit thickness reduction of the shape in the one or more required regions during the varying of the shape of the modeled object in each of the multiple iterations of the optimization loop, and the adjusting can include: for a first portion of the data values of the at least one path that correspond to a medial axis of the shape, casting a ray from each of multiple spatial points corresponding to the first portion of the data values, and estimating an extremum of values in the level-set representation along each ray to produce an adjusted spatial point; and for a second portion of the data values of the at least one path that do not correspond to the medial axis of the shape, smoothing spatial points corresponding to the second portion of the data values to produce adjusted spatial points.

The identifying can include thinning a voxelized model of the geometry to produce the at least one path between the two or more specified regions. The identifying can include running a path search algorithm within a voxel space including a voxelized model of the geometry to produce the at least one path between the two or more specified regions, and optionally adjusting a cost function of the path search algorithm to penalize paths based on a local thickness of the shape. The path search algorithm can be limited to searching voxels that are included in the two or more preserve bodies and in output from the thinning.

The path search algorithm can be run concurrently for each of one or more destinations, and the method can include removing a destination preserve body from the search upon reaching each respective destination preserve body. Each of the one or more destinations can include a set of two or more end voxels in respective ones of one or more of the preserve bodies. The method can include updating a found path from a starting preserve body during back-tracing from the respective destination preserve body to the starting preserve body.

The path search algorithm can be limited to searching voxels that are included in the two or more preserve bodies and in the output from the thinning during a first pass search, and a second pass search can be performed when the first pass search fails to find a path between a starting preserve body and all destination preserves. The identifying can include searching a graph including nodes and edges, the nodes represent the two or more specified regions and any junctions along an initial path between the two or more specified regions, and the edges represent individual portions of the at least one path between the two or more specified region and any junctions along the initial path between the two or more specified regions. The initial path between the two or more specified regions can include a line skeleton generated using voxelized thinning of the shape, and the method can include falling back to running a path search algorithm within a voxel space including a voxelized model of the geometry to produce the at least one path between the two or more specified regions.

The producing can include adjusting data values of the at least one path in each of the multiple iterations of the optimization loop to produce adjusted data values for the at least one path, limiting the thickness reduction of the shape can include using the adjusted data values to limit thickness reduction of the shape in the one or more required regions during the varying of the shape of the modeled object in each of the multiple iterations of the optimization loop, and using the adjusted data values to limit thickness reduction of the shape in the one or more required regions can include: calculating shape thickness values for the modeled object using the adjusted data values; and modifying an amount of change to the modeled object, from numerical simulation in each of the multiple iterations of the optimization loop, by slowing a shape change in accordance with a target disconnection thickness and the shape thickness values.

The shape of the modeled object can include a level-set representation of an implicit surface of the modeled object, and the calculating can include: forming a thickened level-set representation by performing a Boolean union of a sphere, for each of the adjusted points, into a copy of the level-set representation of the implicit surface of the modeled object; and estimating the shape thickness values based on a difference between the level-set representation of the implicit surface of the modeled object and the thickened level-set representation.

The varying can include varying a three-dimensional shape and topology of the modeled object in accordance with one or more design criteria, and the modifying can include: performing the slowing, in a direction toward the target disconnection thickness, at locations in the modeled object where the shape thickness values are greater than, but within a predefined distance of, the target disconnection thickness; and forcing a shape change, in a direction toward the target disconnection thickness, at locations in the modeled object where the shape thickness values are less than the target disconnection thickness.

The slowing can be performed at each of the locations by an amount that is based on a difference between a shape thickness value at the location and the target disconnection thickness, and the forcing can be performed at each of the locations by an amount that is based on a difference between a shape thickness value at the location and the target disconnection thickness. The amount used in the slowing can be computed by performing operations including: computing the amount used in the slowing using a fixed percentage of the difference between the shape thickness value at the location and the target disconnection thickness.

The producing can include: determining that a thickness of the modeled object along the at least one path has dropped below an activation thickness; and limiting the thickness reduction of the shape in at least a portion of the one or more required regions along the at least one path in response to the thickness of the modeled object along the at least one path having dropped below the activation thickness. The determining can be performed in each iteration of the optimization loop up until the thickness of the modeled object along the at least one path has dropped below the activation thickness, and the multiple iterations can be a proper subset of all the iterations of the optimization loop.

The geometry defined in the data structure can be modelled with a level-set representation of an implicit surface of a modeled object, and the producing can include: forming a thickened level-set representation by performing a Boolean union of a sphere, for each of multiple points corresponding to the at least one path, into a copy of the level-set representation of the implicit surface of the modeled object; and replacing the level-set representation of the implicit surface of the modeled object with the thickened level-set representation for the modeled object to produce the new geometry defined in the data structure for the one or more required regions. The producing can include: detecting a disconnection has occurred along the at least one path in at least one iteration of the optimization loop; and performing the forming and the replacing in response to detecting the disconnection.

Particular embodiments of the subject matter described in this specification can be implemented to realize one or more of the following advantages. The described connectivity filtering can be employed during shape and/or topology optimization of an object (e.g., automatically generating at least a portion of a part to be manufactured) to reduce failures in the resulting design due to disconnection of respective portions of the shape being synthesized; a disconnection occurs when the design breaks into two separate pieces for respective preserves, either at the beginning or during the course of the shape optimization process. Upcoming disconnections of geometry (e.g., that is being synthesized using topology optimization) can be identified and/or prevented. Disconnections of geometry (e.g., that is being synthesized using topology optimization) that have already occurred can be detected and/or corrected. Moreover, valid starting shapes can be created in situations where obstacles pose problems for existing shape synthesis algorithms.

In generative design, the connectivity filtering can be used to improve starting shape validity and outcome quality, and can work with all suitable manufacturing constraints, and with a minimum feature size constraint, as well as with unconstrained runs in both linear static and fluid channel optimization paradigms or other physics domains, e.g., thermal, multiphysics, etc. The connectivity filtering can improve outcome quality in generative design by preventing disconnections that would otherwise result from a first preserve having an applied load that is orders of magnitude smaller than an applied load at a second preserve. Such initial setups for generative design can cause the numerical simulation of the shape being generated to produce a very small sensitivity in the region connecting the first preserve to the rest of the design, so small in fact that the needed member size cannot not be realized in the resolution being utilized in the numerical simulation, and so a disconnection will occur, often early in the optimization process, thus causing the remainder of the shape to not evolve significantly, producing a result that has little value to the user.

Another common cause for disconnections in generative design is groups of constrained preserves. Two or more preserves (e.g., bolt holes that will be used to connect the generatively design shape to other parts in a larger system) can all be assigned a fixed constraint, but the optimizer may be able to most effectively respond to the loads using only a proper subset of the supplied preserves, thus causing a disconnection for a preserve not included in this proper subset. Such disconnections can also occur relatively early in the optimization process. The connectivity filtering described in this application prevents such disconnections in generative design (e.g., disconnections resulting from a group of constrained preserves and/or from a large mismatch in applied loads for different preserves) and allows the shape optimization to continue to completion and produce a usable result.

In addition, the technology described can be used to improve automated modeling, which can also use topology optimization to synthesize designs, but does so much more quickly (in minutes, not hours, using current computer processors) and without a starting shape or physical boundary conditions, such as are typically used in generative design. Since automated modeling typically uses one or more approaches to physical simulation, and course mesh representations of the geometry, disconnections of the geometry are common in automated modeling. For example, because of the approach that automated modeling typically takes to the physics, there are no guarantees that the strain energy field provided leads to a shape that connects all the input preserves. Thus, automated modeling can be substantially improved using the systems and techniques described in this document. Moreover, handling disconnections at a geometric level (rather than, or in addition to, using optimization or simulation adjustments to minimize disconnections) provides a computationally efficient and robust solution that prevents disconnections and reduces the risk of an unusable design being produced.

The details of one or more embodiments of the subject matter described in this specification are set forth in the accompanying drawings and the description below. Other features, aspects, and advantages of the invention will become apparent from the description, the drawings, and the claims.

BRIEF DESCRIPTION OF THE DRAWINGS

FIG. 1A shows an example of a system usable to facilitate computer aided design of structures with connectivity filtering during shape synthesis.

FIG. 1B shows an example of a process of automated modeling, generative design, and/or shape synthesis.

FIG. 1C shows an example of an iterative loop in a process of automated modelling or generative design with preserve bodies disconnection prevention.

FIG. 2A shows an example of shape generation to connect specified regions, in two-dimensional or three-dimensional computer models, including when obstacle bodies are present.

FIG. 2B shows an example of a voxelized line skeleton for a shape.

FIGs. 2C and 2D show a process of ray casting and extremum estimation to refine a skeletal point to be closer to the medial axis of a 3D shape.

FIGs. 2E and 2F show a process used to find a voxel along a search direction as close as possible to the bottom of the valley of the signed distance field.

FIG. 3A shows an example of using a path search algorithm within a voxelized model to identify a critical path.

FIG. 3B shows an example of using a pathfinding algorithm to search for paths between preserves.

FIG. 3C shows an example of a two pass pathfinding search process.

FIG. 3D shows an example of prioritizing some paths between preserve bodies.

FIGs. 4A-4F show an example of a graph search procedure for identifying a critical path.

FIG. 5A shows an example of a process of using adjusted data values (for an identified path) to limit thickness reduction of a shape in one or more required regions during variation of the shape of the modeled object in an optimization loop.

FIG. 5B shows an example of calculating shape thickness values for a modeled object.

FIG. 6 is a schematic diagram of a data processing system including a data processing apparatus, which can be programmed as a client or as a server, and implement the techniques described in this document.

Like reference numbers and designations in the various drawings indicate like elements.

DETAILED DESCRIPTION

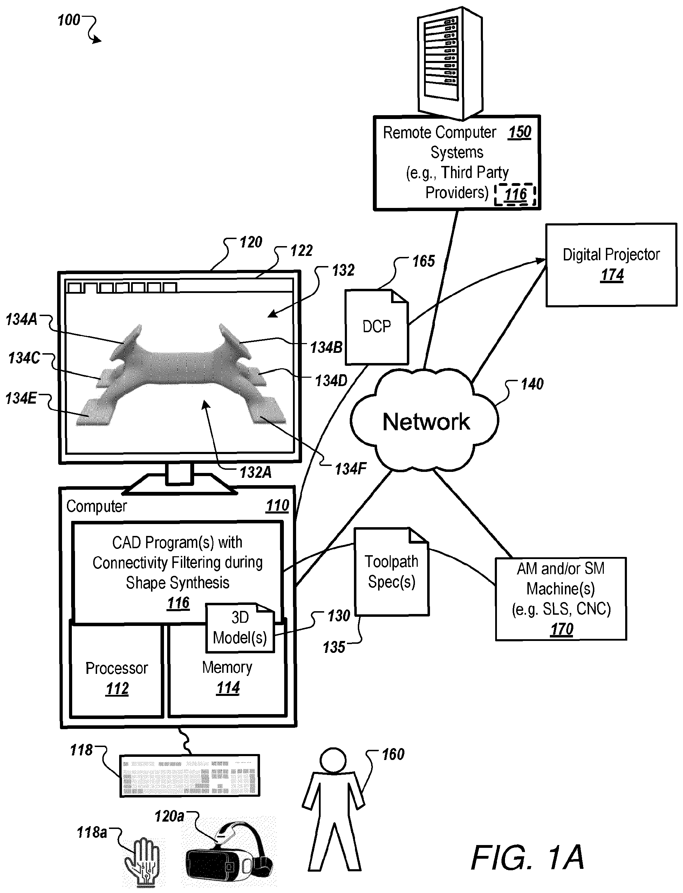

FIG. 1A shows an example of a system usable to facilitate computer aided design of structures with connectivity filtering during shape synthesis. A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which implement two-dimensional (2D) and/or three-dimensional (3D) modeling functions and include filtering during shape synthesis, which can be implemented as part of one or more generative design processes for topology optimization, e.g., using at least one level-set method as described, in other applications of topology optimization, e.g., automated modeling, and/or for assessing the connectivity of the geometry of a design or as a standalone geometry synthesis method.

In some instances, the numerical simulation performed by the systems and techniques described in this document can simulate one or more physical properties and can use one or more types of simulation to produce a numerical assessment of physical response (e.g., structural response) of the modeled object. For example, finite element analysis (FEA), including linear static FEA, finite difference method(s), and material point method(s) can be used. Further, the simulation of physical properties can include Computational Fluid Dynamics (CFD), Acoustics/Noise Control, thermal conduction, computational injection molding, electric or electro-magnetic flux, and/or material solidification (which is useful for phase changes in molding processes) simulations.

As used herein, CAD refers to any suitable program used to design physical structures that meet design requirements, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, a CAD program 116 can be two or more programs that operate cooperatively on two or more separate computer processors in that one or more programs 116 operating locally at computer 110 can offload processing operations (e.g., shape generation and/or physical simulation operations) "to the cloud" by having one or more programs 116 on one or more computers 150 perform the offloaded processing operations. In some implementations, all shape generation operations are run by one or more programs in the cloud and not in a shape representation modeler (e.g., B-Rep modeler) that runs on the local computer. Moreover, in some implementations, the shape generation program(s) can be run in the cloud from an Application Program Interface (API) that is called by a program, without user input through a graphical user interface.

The CAD program(s) 116 present a user interface (UI) 122 on a display device 120 of the computer 110, which can be operated using one or more input devices 118 of the computer 110 (e.g., keyboard and mouse). Note that while shown as separate devices in FIG. 1A, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, and 120 can include VR/AR input controllers, gloves, or other hand manipulating tools 118a, and/or a VR/AR headset 120a. In some instances, the input/output devices can include hand-tracking devices that are based on sensors that track movement and recreate interaction as if performed with a physical input device. In some implementations, VR and/or AR devices can be standalone devices that may not need to be connected to the computer 110. The VR and/or AR devices can be standalone devices that have processing capabilities and/or an integrated computer such as the computer 110, for example, with input/output hardware components such as controllers, sensors, detectors, etc.

In any case, a user 160 interacts with the CAD program(s) 116 to create and modify 2D and/or 3D model(s), which can be stored in model document(s) 130. In the example shown in FIG. 1A, a 3D model 132 includes geometry 132A that has been automatically generated using a process that employs systems and techniques described in this document. The shape generation process can receive an initial 3D model as input, i.e., the starting shape (or "seed geometry"). In some implementations, the seed geometry includes one or more preserve regions, such as preserve bodies 134A, 134B, 134C, 134D, 134E, 134F. In some implementations, boundary constraints can be defined with respect such preserve regions, and the starting shape for shape optimization (and optionally topology optimization) can be formed as the convex hull of the preserve regions or be specified by the user. In some implementations, the starting shape can be generated using the systems and techniques described in this document.

The input preserve regions can be unconnected modeled solids or surfaces (e.g., user identified faces of modeled solids), and a shape generation process is used to produce new 3D geometry in a design space, which is the volume of space inside which the object is to be designed during shape and/or topology optimization, and where this new 3D geometry connects all the input preserve regions, such as in the example of FIG. 1A. In some cases, the user may explicitly specify the design space. In some implementations, the CAD program(s) 116 can automatically determine the design space. Moreover, while the following discussion focuses on connecting preserve regions in a 3D model, the present disclosure is more generally applicable to ensuring connections between two or more specified regions of a 2D or 3D shape being automatically generated.

In some implementations, the user 160 can define a topology optimization problem for a generative design process to produce a desired 3D model from a starting 3D model, or the input can be a design space without a specific starting 3D model. In general, the input design space can be automatically generated or user specified. Note that the generative design process itself can produce starting geometry within the design space. For example, one or more seed models can be used as input to the generative design process to introduce holes at the start of the shape evolution so as to modify the topology of the generative design.

The CAD program(s) 116 can implement at least one generative design process, which enables the CAD program(s) 116 to generate one or more portions of the 3D model(s) (or the entirety of a 3D model) automatically based on design objective(s) and constraint(s), i.e., design criteria, where the geometric design can be iteratively optimized based on simulation feedback (e.g., based on a numerical, physics simulation). In some instances, multiple 3D models can be co-created by one or more generative design processes and can be assembled to form a new 3D model. Note that, as used herein, "optimization" (or "optimum") does not mean that the best of all possible designs is achieved in all cases, but rather, that a best (or near to best) design is selected from a finite set of possible designs that can be generated within an allotted time, given the available processing resources.

The design criteria can be defined by the user 160, or by another party and imported into the CAD program(s) 116. The design criteria can include a geometric objective that drives the shape (and optionally topology) evolution using an iterative numerical simulation process, with or without physics/physical response simulations. The design criteria can also include physics objectives for the evolution of the structure of the 3D model. For example, a geometric objective can correspond to a pseudo-physical response of the 3D model. In some implementations, the generative design process can be a structural generative design process that can be associated with boundary conditions, which can specify in-use load case(s) of the physical structure. In some instances, the boundary conditions can be pressure and velocity boundary conditions. In some implementations, the design criteria can include structural integrity constraints for individual parts (e.g., a requirement that a part should not fail under the expected structural loading during use of the part) and physical constraints imposed by a larger system (e.g., a requirement that a part be contained within a specified volume so as not to interfere with other part(s) in a system during use).

Various generative design processes can be used, which can optimize the shape and topology of at least a portion of the 3D model. The optimization of the geometric design of the 3D model(s) by the CAD program(s) 116 can involve topology optimization, which is a method of light-weighting where the optimum distribution of material is determined by minimizing an objective function subject to design constraints (e.g., structural compliance with volume as a constraint). There are two primary categories of topology optimization, density-based approaches and boundary-based approaches. Density-based approaches discretize the volume of the part, and assign a density to each discrete cell, such as in a Solid Isotropic Material with Penalization (SIMP) method. Then the densities are driven toward solid and empty while minimizing the objective(s) subject to the constraints. Boundary-based approaches instead track the shape of the external interface of the solid part and move the boundary such that the constraints are satisfied and the objective(s) are minimized, such as in a level-set method.

In some implementations, a generatively designed 3D shape of a modeled object has a level-set representation used during generative modelling of the object. The generatively designed 3D shape of the object can be varied using topology optimization to update the level-set representation in accordance with shape change velocities based on numerical simulation evaluation. A level-set representation method can be used to track the boundary of the shape of the modeled object during topology optimization, which has the advantages of providing precise knowledge of the boundary, and allowing topological changes as the surface evolves without the need for re-meshing. In any case, note that the shape synthesis process can (and often will) be done using a different representation of geometry than that employed by the CAD program(s) 116 for 3D modelling. For example, the CAD program(s) 116 can use a B-Rep model for the input geometry, while the geometry generation engine (e.g., in CAD program(s) 116) can employ a level-set function embedded in a voxel or tetrahedral mesh.

More generally, in some implementations, the shape (and optionally topology) of a 2D or 3D modeled object is produced using generative design processes or automated modeling that employs connectivity filtering to ensure that connections are maintained between two or more specified regions of the 2D or 3D shape being automatically generated. In some implementations, the described process of assessing connectivity of the geometry of a design is used outside of the context of generating new geometry. For example, the connectivity assessment process can be used to provide simplified visualizations in the UI 122 on the display 120 of complex structure, e.g., for use in additive or injection molding manufacturing preparation software, or for use in animation preparation software.

Once the user 160 is satisfied with the algorithmically designed model 132, the computer model 132 can be stored as a model document 130 and/or used to generate another representation of the model (e.g., toolpath specifications for a manufacturing process). This can be done upon request by the user 160, or in light of the user's request for another action, such as sending the computer model 132 to a manufacturing machine, e.g., additive manufacturing (AM) machine(s) and/or subtractive manufacturing (SM) machine(s) 170, or other manufacturing machinery, which can be directly connected to the computer 110, or connected via a network 140, as shown. This can involve a post-process carried out on the local computer 110 or externally, for example, based on invoking a cloud service running in the cloud, to further process the generated 3D model (e.g., based on considerations associated with the additive manufacturing process) and to export the 3D model to an electronic document from which to manufacture. Note that an electronic document (which for brevity will simply be referred to as a document) can be a file, but does not necessarily correspond to a file. A document may be stored in a portion of a file that holds other documents, in a single file dedicated to the document in question, or in multiple coordinated files. In addition, the user 160 can save or transmit the 3D model for later use. For example, the CAD program(s) 116 can store the document 130 that includes the algorithmically designed model 132.

The CAD program(s) 116 can provide a document 135 (having toolpath specifications of an appropriate format) to an AM and/or SM machine 170 to produce a physical structure corresponding to at least a portion of the algorithmically designed model 132. An AM machine 170 can employ one or more additive manufacturing techniques, such as granular techniques (e.g., Powder Bed Fusion (PBF), Selective Laser Sintering (SLS) and Direct Metal Laser Sintering (DMLS)) or extrusion techniques (e.g., Fused Filament Fabrication (FFF), metals deposition). In some cases, the AM machine 170 builds the physical structure directly, and in some cases, the AM machine 170 builds a mold for use in casting or forging the physical structure.

An SM machine 170 can be a Computer Numerical Control (CNC) milling machine, such as a multi-axis, multi-tool milling machine used in the manufacturing process. For example, the CAD program(s) 116 can generate CNC instructions for a machine tool system 170 that includes multiple tools (e.g., solid carbide round tools of different sizes and shapes, and insert tools of different sizes that receive metal inserts to create different cutting surfaces) useable for various machining operations. Thus, in some implementations, the CAD program(s) 116 can provide a corresponding document 135 (having toolpath specifications of an appropriate format, e.g., a CNC numerical control (NC) program) to the SM machine 170 for use in manufacturing the physical structure using various cutting tools, etc.

In addition, in some implementation, no physical manufacturing is involved. The systems and techniques described herein are applicable to any suitable 2D or 3D modelling software. Thus, in some implementations, the CAD program(s) 116 can be animation production program(s) that render the 3D model 132 to a document 165 of an appropriate format for visual display, such as by a digital projector 174 (e.g., a digital cinema package (DCP) 165 for movie distribution) or other high resolution display device. Other applications are also possible. Nonetheless, in various implementations, the CAD program(s) 116 of the system 100 implement one or more generative design processes to seek an optimal geometric shape, topology, or both, such as described in U.S. Application No. 17/707,886, filed 29 March 2022, titled "COMPUTER AIDED GENERATIVE DESIGN WITH FEATURE THICKNESS CONTROL TO FACILITATE MANUFACTURING AND STRUCTURAL PERFORMANCE", and published on 8 June 2023 as U.S. Publication No. 2023-0177224-A1.

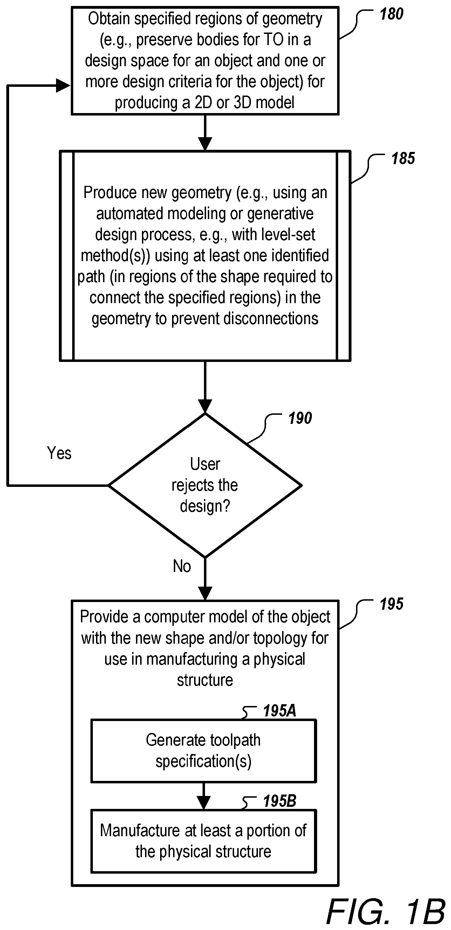

FIG. 1B shows an example of a process of automated modeling, generative design, and/or shape synthesis. Generative design processes seek an optimal geometric shape among alternative designs by minimizing a performance-related objective function subject to constraints:

minimize

$$J\left(s, u(s)\right) \quad s \in \mathbb{R}^{n_s} \qquad (1)$$

such that

$$g_i\left(s, u\left(s\right)\right) = 0 \quad i = 1, \ldots, n_g \qquad (2)$$

where s is a vector of design variables related to a geometric shape of the domain, and u is a vector of state variables (e.g., displacement) that depend on s. Additional constraints (e.g., equilibrium) are denoted by a set $g_i$. For simplicity, equality constraints are assumed here. Mathematical programming methods used to minimize Equation (1) can be gradient-based or non-gradient-based. Gradient-based methods (versus non-gradient-based methods) generally use more information associated with design sensitivity, for example:

$$\frac{dJ}{ds}\left(s, u\left(s\right)\right) = \frac{\partial J}{\partial s} + \frac{\partial J}{\partial u}\frac{du}{ds} \qquad (3)$$

which is a derivative of the performance-related objective function with respect to the design variables. In level-set based topology optimization methods, s represents a boundary of a solid region.

Topology optimization has historically focused on minimizing some physical response of the part under a volume constraint. The user provides one or more preserve bodies to which are applied boundary conditions (i.e. "loads" and "constraints" for a mechanical simulation). A simulator takes the initial shape and these boundary conditions and produces a sensitivity everywhere in the geometry indicating the relative importance of each region to the performance of the design, and the optimizer updates the design according to this sensitivity to produce a next iteration design.

In practical applications of this shape synthesis method, especially if more than two preserves are present, the relative importance of the boundary conditions applied to two preserves can vary significantly. In these cases, the optimizer may intentionally (or due to numerical precision or geometry resolution constraints) break the connection between one or more preserves as the optimization progresses. For example, consider a rectangular design domain constrained in the middle and having a 1000 Newton (N) load applied at one end and a 0.1 N load applied at the other end. When the problem is solved with a topology optimization routine that minimizes strain energy with a volume constraint, a possible optimized design can be one in which almost all the allowable volume is used to support the larger load, with only a very tiny rib connecting the smaller load to the constrained preserve in the middle of the design space. In practice, this small rib is often thinner than the optimizer's discretization of the geometry can represent, and it is removed entirely. Such a "disconnection" of one preserve from the others presents two problems: first, it is likely undesirable for the user (implicitly or explicitly, the user's intent is that all the preserves supplied should be connected in the final design); and second, it may cause numerical problems for the simulation code (the loaded but unconstrained body now is no longer in static equilibrium and the state equations are unsolvable).

The systems and techniques described in this document can prevent such disconnections during generative design processes. The described disconnection prevention technology can be applied to improve the robustness of the shapes created with generative design and can improve the quality of the results and/or reduce failures in many production generative design runs. Further, the described technology can also be used with generative fluids flow designs to ensure all outlets of a fluids problem remain attached to the main flow channel, even if that is not the most optimal configuration. The described technology can make generative design processes more accessible to non-experts.

The described technology addresses disconnection detection and correction, in addition to prevention, and can be applied over a broader range of optimization setups. The described systems and techniques can be used with automated modeling, which unlike generative design, can have a very high disconnection rate, which causes an unacceptable number of failures. The use of the described technology with automated modeling can significantly reduce or eliminate such disconnections and solution failures during automated modeling solves. The described technology can prevent failures caused in traditional automated modeling by the starting shape being broken into separate pieces by obstacle geometry, effectively eliminating that failure mode and improving the robustness of the solution.

Beyond the shape and topology optimization context, the described technology can be applied to any problem where two or more bodies (e.g., preserves) need to be connected with new geometry, which can be referred to as the starting shape creation problem. In general, a shape modeling computer program (e.g., CAD program(s) 116) obtains 180 two or more specified regions (e.g., preserve bodies) of geometry defined in a data structure used by the shape modeling computer program, and produces 185 new geometry defined in the data structure for one or more regions that are required in order to ensure connection between at least two of the specified regions of the geometry. This is done using at least one identified path between the specified regions (e.g., the preserve bodies) that must be included in the geometry to ensure connection between the specified regions of the geometry.

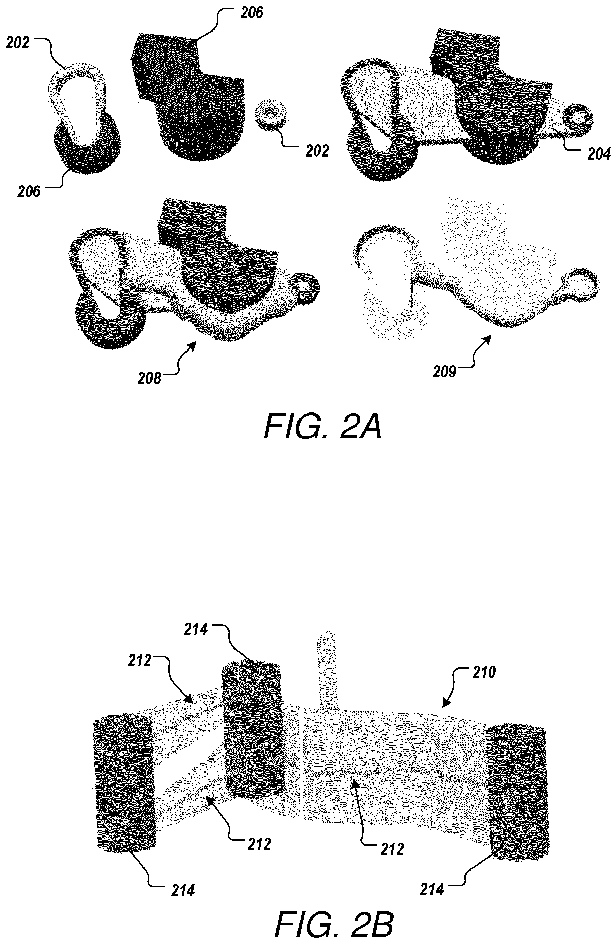

In some implementations, this is done during automated modeling, generative design, or both, for example, using the level-set based methods described further below. In some implementations, this is done to solve the starting shape creation problem, e.g., as a preprocess to level-set topology optimization (TO) to produce an initial shape that connects all the preserves (in the absence of such a shape being specified by the user). FIG. 2A shows an example of shape generation to connect specified regions, in 2D or 3D computer models, including when obstacle bodies are present. In this example, preserve bodies 202 need to be connected with each other in a starting shape, but the traditional approach of generating a convex hull 204 using the preserve bodies 202 as input will not work because an obstacle body 206 prevents all the preserve bodies 202 from being joined together by that convex hull 204 in a single starting shape for shape and/or topology optimization; the convex hull disconnected (split into two bodies) due to the obstacles. In some implementations, when a traditional approach, such as convex hull generation, fails to produce a usable starting shape for optimization, e.g., for automated modeling or generative design process(es), the techniques described in this document can be used to generate a starting shape 208 that circumvents the obstacle body 206. This starting shape can then be optimized to produce a resulting design 209.

Moreover, in some implementations, the techniques described in this document are used for shape creation generally (in 2D or 3D) where the produced shape can be used for processes other than iterative shape or topology optimization. For example, the disconnection geometry filter described in detail below can be used to create a shape that connects a set of preserve bodies 202 (whether or not an obstacle body 206 is present) that is then provided as output to the user (to the display device and/or to storage) and/or as input to further process(es). In other words, the new geometry that is produced 185 can be additional geometry that is created for some further use, such as being input to an iterative shape and/or topology optimization loop, and/or the new geometry that is produced 185 can be a modified version of input geometry provided to an iterative shape and/or topology optimization loop, where that modification occurs in the iterative loop.

In the case of shape and/or topology optimization (e.g., automated modeling or generative design) a design space for a modeled object and one or more design criteria can be obtained 180, e.g., by CAD program(s) 116, for use in producing a 2D or 3D model. The design space for a 3D modelled object is the volume inside which the part is to be designed. The design space can include a bounding volume containing an initial specification of one or more outer shapes of the 3D topology for the object. As noted above, the design space can include 3D model(s), designed in or loaded into the CAD program(s) 116, that serves as a sub-space of an optimization domain of a described generative design process, and/or a set of input regions, e.g., preserve bodies and/or surfaces, used to specify boundary conditions for generative design geometry production, e.g., B-Reps (or faces thereof) selected by a user through a user interface, such as the UI 122, to specify sub-region(s) that are preserved for use as connection point(s) with other component(s) in a larger 3D model or separate 3D model(s).

The design criteria can include design objective(s) and design constraint(s) for the object. Design objectives can include but are not limited to minimizing waste material, minimizing the weight of the part, and minimizing the compliance, stress, or other intrinsic property of the part, and are used to drive the shape synthesis process towards better designs. Though not required, it is typical for a design objective to be rooted in a simulation of the design (linear static, fluid dynamic, electromagnetic, etc.). Design constraints can include a variety of geometric and physical characteristics or behaviors that should be met in any generated design (requirements either on individual parts or on the entire assembly are also admissible); examples include maximum mass, maximum deflection under load, maximum stress, etc.

The design criteria can also include geometric objectives for the shapes and geometric constraints. The geometric constraints can be provided by a user or from the CAD program(s) 116 to ensure certain characteristics of the shape are realized, e.g., to provide a shape that is easier to manufacture. For example, the geometric constraints can be defined to ensure that the generated shape can have no tiny features. The input geometry can include details for preserve regions that should be present in the design as representing interfaces to other parts of the system, or identify locations on which boundary conditions should be applied (e.g., mechanical loads and constraints).

Further, different generative design processes can be formulated by using different combinations of design parameters and design variables. In some implementations, the design parameters can include various types of inputs, e.g., received through UI 122, such as selection among different generative design and/or automated modeling shape synthesis methods made available by CAD program(s) in the system 100. In some implementations, the available generative design and/or automated modeling shape synthesis methods can include a level-set-based topology optimization that provides a basic level-set method for topology optimization. Other shape synthesis methods are also possible and can be provided by CAD program(s) in the system 100. Different combinations of design parameters and design variables can be used, e.g., by CAD program(s) 116 in response to input from the user 160. For example, a user 160 may select different shape synthesis methods to use within respective different design spaces within a single 3D model.

The obtained 180 one or more design criteria can include one or more in-use load cases (e.g., one or more boundary conditions that specify one or more in-use load cases) for a physical structure to be manufactured from a generatively designed part. The one or more in-use load cases can be associated with a setup for numerical simulation, e.g., densities of elements in an FEA model to be used with an optimized 3D topology of the part being generatively designed. However, as used herein, "in-use load cases" refer generally to separate groups of loads and constraints under which part performance is evaluated and correspond to sets of boundary conditions for various types of physics simulations, such as fluid flow simulation, electro-magnetic (EM) behavior simulation, multiphysics simulation, etc. Thus, various types of boundary conditions, e.g., pressure and/or velocity boundary conditions, can be used.

In general, the setup for numerical simulation can include one or more physical properties to be simulated and one or more types of simulation to be performed, as well as potentially surrogate modelling or other methods of approximation. In some implementations, the type of numerical simulation is predefined, either for all uses of the program or given a particular context in the program from which the generative design process has been launched. Further, the setup for numerical simulation can include at least one set of loading conditions and/or other physical environment information associated with the type of numerical simulation to be performed.

In the case of automated modeling, no physical boundary conditions are required as user input for the numerical simulation; simulation(s) with predefined boundary conditions (e.g., supplied by the program using a heuristic), simulation(s) with no boundary conditions, or a combination thereof can be used (e.g., to associate any needed boundary conditions with the input preserve bodies), and the numerical simulation(s) can use a pseudo-strain energy field to generate the numerical assessment used to guide change of the modeled shape, e.g., by minimizing the pseudo-strain energy with a volume constraint in the iterative loop of the automated modeling process. Other numerical simulating approaches can be used in automated modeling implementations, such as using thermal, fluid, or electromagnetic simulation with suitable predefined boundary conditions applied by the program. Moreover, the systems and techniques described in this document are usable in other content creation contexts, such as in media and entertainment applications (e.g., animation production) and architectural design and construction management.

In some implementations, 3D model(s) that are produced 185 can be for use in additive manufacturing, subtractive manufacturing (e.g., manufactured using a 2.5-axis subtractive manufacturing process), and/or other manufacturing systems and techniques. The one or more generative design processes performed, e.g., by CAD program(s) 116, can include a boundary-based generative design process (e.g., using a level-set method) of topology optimization, a density-based generative design process (e.g., using a SIMP method), or both. Topology optimization includes modifying both a geometry of the 3D shape and a topology of the 3D shape (e.g., adding holes or voids to modify the spatial properties of the surface that are unaffected by continuous deformation without tearing, thus changing how shape elements are bounded and connected in the 3D model). In some implementations, the one or more generative design processes can use the described level-set methods, where s, from equations (1), (2) and (3), represents a boundary of a solid region that is implicitly represented using one or more level-sets, which can be stored as sampled values on a background grid or mesh. A signed distance field is an example of such a level set function, where the zero-contour represents the shape boundary, positive values of the function correspond to points exterior to the material domain and quantify the distance between the point and the nearest domain surface, and negative values correspond to points interior to the material domain and quantify the distance between the point and the nearest domain surface. In a level-set-based topology optimization method, the outer shape of a structure is represented by a contour of the level set function, and a change in shape and configuration is represented by a change in the level set function values.

In any case, the production 185 of 3D model(s) can involve iteratively modifying, e.g., by CAD program(s) 116, a 3D shape of the modeled object while preventing disconnection of specified regions (e.g., preserve bodies) and optionally detecting and reconnecting those specified regions when a disconnection occurs. In some implementations, the production 185 of the 3D model(s) includes finding a voxelized line skeleton of the shape (directly or by doing a path search within a generated voxelized sheet skeleton of a 3D shape of the model), and the voxelized line skeleton can be used to measure thickness in the 2D or 3D shape, as well as to identify the path that is used to prevent disconnection of specified regions. Other approaches are also described for identifying the path. In any case, the result is at least one produced 2D model or 3D model, e.g., for use in connection with a manufacturing process.

The result of generative design processing can be presented to the user, e.g., in UI 122 on display device 120, along with an option 190 to accept or reject the design. For example, a 3D model produced by the processing 185 can be presented to the user 160 in UI 122. In some implementations, the user can select from the final design or any of a variety of previous iterations for each design study. In some implementations, two or more 3D models resulting from the production 185 process can be presented to the user along with trade-off analysis of design complexity versus cost of manufacturing, e.g., based on the amount of external support structure that will be needed, or any of a variety of other quantities of interest. The trade-off analysis can assist a user 160 to accept or reject one or more 3D models among the presented 3D models.

If the design is rejected, the process of FIG. 1B can return to obtain 180, e.g., by CAD program(s) 116, new design space and/or new design criteria for use in producing a new 2D or 3D model. Once a design is not rejected 190, the process of FIG. 1B can provide 195, e.g., by CAD program(s) 116, the model of the object with the synthesized shape and/or topology for use in manufacturing a physical structure. The providing 195 can involve sending or saving the 3D model to a permanent storage device for use in manufacturing the physical structure corresponding to the object using manufacturing systems. In some implementations, the providing 195 involves generating 195A, e.g., by CAD program(s) 116, toolpath specifications for computer-controlled manufacturing system(s) using the computer model, and manufacturing 195B, e.g., by CAD program(s) 116, at least a portion of the physical structure corresponding to the object with the computer-controlled manufacturing system(s) using the toolpath specifications. In some implementations, the providing 195 can include manufacturing 195B a mold for a physical structure with a manufacturing machine using the toolpath specification generated 195A, where the computer model can be a model of the mold that will be manufactured using a subtractive manufacturing process.

The computer model that is provided 195 can be the computer model produced 185 by a generative design or automatic model synthesis method or a post-processed version of the output of such. In some implementations, a polygon mesh, which can be extracted from the output from a boundary-based topology optimization process, or design data obtained directly from the boundary-based topology optimization process, can be converted into a boundary representation (B-Rep) model and/or a parametric feature model, e.g., by CAD program(s) 116. For example, topology optimization data can be level-set distance field data obtained directly from the boundary-based topology optimization process. The boundary representation model or the parametric feature model can be editable as sketch geometry and parametric features. For example, in some implementations, a 3D mesh model produced by a generative design synthesis method can be converted into a watertight B-Rep 3D model, before being provided 195.

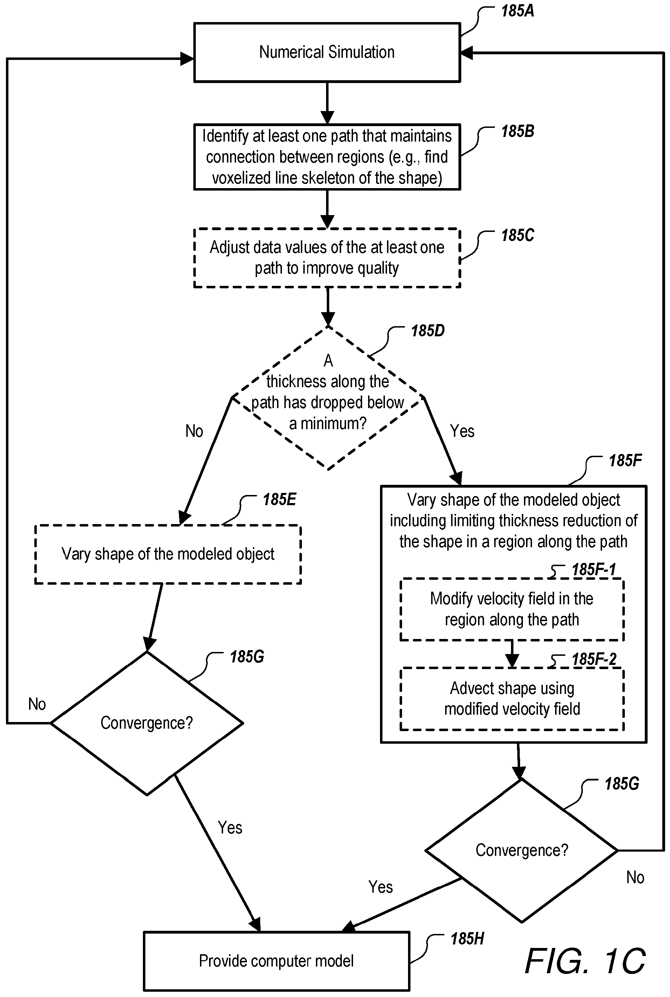

FIG. 1C shows an example of an iterative loop in a process of automated modeling or generative design with preserve bodies disconnection prevention. This example represents topology optimization performed in the defined process 185 of FIG. 1B. Numerical simulation is performed 185A for a current computer model of the object (e.g., using a level-set representation of an implicit surface of a 3D shape in accordance with the one or more design criteria) to produce a current numerical assessment of the modeled object. As noted above, the design criteria can include boundary conditions that can define in-use load cases or other requirements (e.g., pressure and velocity boundary conditions, a geometric objective for topology evolution, etc.), and the current numerical assessment can be for the physical response (e.g., structural response) of the modeled object. Further, as noted above, various types of numerical simulation can be performed. For example, an FEA simulation can compute strain energy everywhere inside the volume of the current version of the 3D model. In any case, physical simulation of the current shape is performed 185A, such as by computing strain energy inside the current volume, to produce a current numerical assessment that can then be used to change the shape and/or topology of the current computer model (e.g., in view of the design criteria).

In addition, at least one path is identified 185B between two or more specified regions (e.g., between preserve bodies). In some implementations, the identifying 185B can involve thinning a voxelized model of the geometry to produce the at least one path between the two or more specified regions, as described in further detail below. The voxelized model of the geometry can be the same voxelized model used in the numerical simulation 185A, and the identifying 185B need not come after (or be separate from) the numerical simulation 185A, e.g., the identifying 185B can be integrated with the numerical simulation 185A. In some implementations, the voxelized model of the geometry used for the identifying 185B can have a different resolution (as well as different voxel types) than that used for the numerical simulation 185A.

The shape of the modeled object is varied 185F in accordance with the result of the numerical simulation 185A. This varying 185F includes limiting thickness reduction of the shape in a region along the at least one path. This limiting of thickness reduction in at least one location within the current shape serves to prevent undesirable disconnections during the optimization loop. Such disconnections should be prevented from the beginning of the optimization loop, but at the beginning of the shape optimization process, there may be little to no risk of a disconnection. Since it may be desirable for the connectivity filtering (i.e., disconnection filtering) to minimize impact on the shape's evolution and only activate if a disconnection occurs or gets close to occurring, in some implementations, an activation thickness is used for the connectivity filtering.

A check 185D can be made to determine whether a thickness of the modeled object along the at least one path (e.g., at a single point along the critical path) has dropped below the minimum activation thickness, before the thickness reduction of the shape is limited 185F in at least a portion of the one or more required regions along the at least one path. Note that some implementations employ the model thickness measuring systems and techniques described in U.S. Application No. 17/707,886, filed 29 March 2022, and titled "COMPUTER AIDED GENERATIVE DESIGN WITH FEATURE THICKNESS CONTROL TO FACILITATE MANUFACTURING AND STRUCTURAL PERFORMANCE", and published on 8 June 2023 as U.S. Publication No. 2023-0177224-A1.

For example, a minimum thickness may be specified for the topology optimization, and the activation thickness can be set based on (e.g., as a fraction of) this minimum thickness. In some implementations, the user is provided control over the activation thickness. For example, the activation thickness can be set equal to the minimum thickness (the fraction is set at 1.0) and so the connectivity filtering turns on as soon as a region along the path shrinks down to the target (minimum) thickness specified, which is a conservative approach. In contrast, the fraction can be set to 0.0, in which case, the shape is allowed to fully disconnect before the connectivity filtering becomes active, thus waiting until the last possible moment to correct the shape using the geometry filter (see the details below regarding detecting disconnection and reconnecting the specified regions) and then continuing optimization with the connectivity filtering turned on. Other values for the fraction between 0.0 and 1.0 are also possible depending on the specific implementation and/or the user's objective.

In some implementations, to minimize the runtime of the disconnection filter in its "inactive" mode, only the steps required to obtain the critical path to perform the activation check 185D are run. For example, in a level-set implementation, each point on the critical path can have an approximate thickness equal to twice its associated radius, which is the signed distance value associated with the point on the path. The number of critical path points with thickness below the activation thickness can be counted, and when the fraction of critical path points below the startup threshold exceeds a startup violation threshold (e.g., 5%-10%), the filter becomes active.

Other approaches are possible for determining 185D that the thickness along the path has dropped to an amount where disconnection has occurred. For example, in a level-set implementation, the shape's level-set representation can be offset inward by an amount equal to the activation thickness, then the check 185D can be made to determine if the resulting level-set representation is split into multiple pieces, for example using a connected components code. If the specified regions (e.g., preserve bodies) lie in different components of the inwardly offset level-set representation, the connectivity filtering 185F is activated. As another example, disconnection can be detected (e.g., when the fraction is set to 0.0) by analyzing a surface mesh representation of the current shape, and in some cases, the surface mesh analysis can be used as a precheck in combination with another disconnection check employed by the disconnection filter.

In general, the evolution of the shape can be watched to determine when a section of the path drops below (or is equal to) the specified threshold of thickness (which can be as low as zero) to activate the connectivity filtering 185F. Further, in some implementations, the entirety of the path(s) between the specified regions need not be checked to make this determination. For example, the check 185D can involve using the graph search approach described below, which means that the entirety of the path(s) between the preserve bodies need not be checked in some cases since the critical path output by the graph approach may be a subset of the path connecting all preserves deemed to be critical to avoid disconnections. In some implementations, this check 185D is done in each iteration of the loop. In some implementations, this check 185D is done in each iteration of the loop up until the thickness of the modeled object along the at least one path has dropped below the activation thickness; thus, once the activation check 185D is triggered one time, the connectivity filtering 185F can remain active for the remainder of the optimization loop, and the check 185D need not be performed any more thereafter.

Before activation of the connectivity filtering 185F, the shape of the modeled object is varied 185E in accordance with the result of the numerical simulation 185A. In some implementations, each of the varying 185E and varying 185F involve transforming the output of the numerical simulation 185A (e.g., the strain energy field inside the volume) into a velocity field on the exterior of the shape (e.g., on the surface of the volume) where evolving the shape according to the velocity at each point moves the geometry towards a more optimal shape; the shape is updated by moving each piece of the exterior of the shape according to its velocity. In some implementations, the shape is represented by a grid of voxels for simulation, by an implicit shape for shape update, and by a polygonal mesh for export of the design.

In general, the numerical assessment from the numerical simulation 185A indicates some amount of change at various locations in the computer model (e.g., at locations on the surface of a 3D shape) in order to improve the model, e.g., with respect to the design criteria. For example, in some implementations, the synthesized 3D shape of the modeled object includes a level-set representation of an implicit surface of the modeled object, and the varying 185E, 185F includes advecting the level-set representation in accordance with shape change velocities computed for the implicit surface based on the current physical assessment. However, in the case of the varying 185F, the velocity field (which specifies the amount of change indicated by the current numerical assessment of the modeled object) is modified 185F-1 in the region along the identified path, as described in further detail below, and the shape of the 3D model is then advected 185F-2 using modified velocity field.

After each iteration of the shape modification loop is completed, the process checks 185G for convergence to a final shape. This can be implicit convergence, as when the number of iterations corresponds to a predefined number of shape modification iterations to be completed, and/or when the modifications are no longer changing (or no longer significantly changing) the shape and so further iterations will not improve the computer model. Additionally or alternatively, the check 185G can be for explicit convergence by evaluating whether the current model satisfies the design criteria for the shape and/or topology optimization. If (implicit or explicit) convergence 185G has not been achieved, another iteration of the optimization loop commences.

Once (implicit or explicit) convergence 185G has been achieved, the synthesized shape for the model of the object is provided 185H, e.g., for use in manufacturing. The shape of the modeled object can be output 185H to produce at least the new geometry defined in the data structure. Note that the data structure's geometry can be a discretized model, such as a polygon mesh or a volumetric mesh, and/or an exact surface model, such as a Non-uniform rational basis spline (NURBS) or a T-Spline model, and this geometry can be provided for use in manufacturing a physical structure using one or more computer-controlled manufacturing systems or for other uses, such as in animations.

Various approaches can be used to identify 185B the at least one path between two or more specified regions (e.g., between preserve bodies). This path (or a portion thereof) can be referred to as a "critical path" as it is the path through the interior of the design that must remain intact in order to maintain a connected shape. In some implementations, the critical path(s) are a proper subset of the voxelized line skeleton of the shape.

For example, identifying 185B the critical path(s) can include finding 185B a voxelized line skeleton for the three-dimensional shape, such as by using the thinning algorithm described in Building Skeleton Models via 3-D Medial Surface/Axis Thinning Algorithms; Lee, Ta-Chih and Kashyap, Rangasami; 6, s.l.: Academic Press, Inc., 1994; CVGIP: Graphical Models and Image Processing, Vol. 56, pp. 462-478, hereafter the "Lee and Kashyap algorithm") with adjustments made to not permit skeleton end points, i.e. every set of line skeleton voxels begins and ends either in a preserve or in a junction with another chunk of line skeleton and there are no "fingers" stretching off into space. Also, voxels can be fixed in each of the preserves such that they cannot be removed by the thinning. These modifications cause the resulting line skeleton to be a subset of the true medial axis that reflects the connectivity of the shape between the preserves while maintaining a path close to the geometric center of each arm of that connectivity, avoiding protrusions and other noisy artifacts that sometimes occur in medial axis construction by thinning. Other voxelized thinning algorithms can be used.

The voxelized line skeleton includes one or more line segments that connect different portions of the shape with each other, and in particular, that connect the preserve regions with each other thru the shape. FIG. 2B shows an example of a voxelized line skeleton 212 that has been found (e.g., computed using the modified Lee and Kashyap algorithm) for a three-dimensional shape 210, with each preserve body 214 required to be present in the result. Further details for finding a line skeleton of a shape are provided in U.S. Publication No. 2023-0177224-A1. For example, voxel erosion can be performed with a thinning algorithm (e.g., using the Lee and Kashyap algorithm) to first form a voxelized sheet skeleton, and then this voxelized sheet skeleton can be eroded with the same thinning algorithm into a voxelized line skeleton. In addition, note that finding 185B the voxelized line skeleton of a shape (for use in identifying the critical path(s)) can involve first computing a sheet skeleton for the 3D shape, and then searching for a path through the sheet skeleton to find the line skeleton. More generally, identifying 185B the critical path(s) can include thinning a voxelized model of the geometry, or using other approaches, to produce the at least one path between the two or more specified regions.

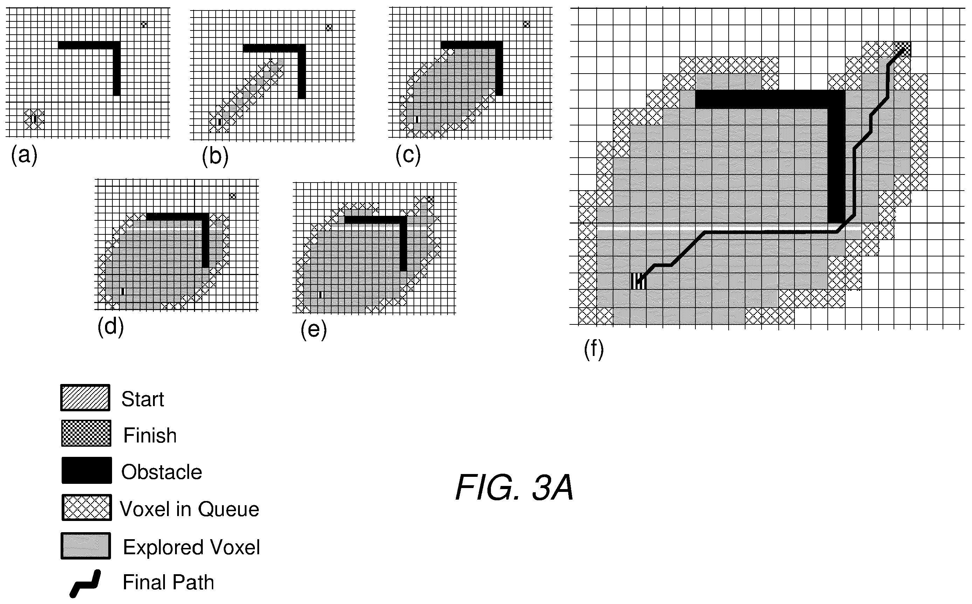

In some implementations, identifying 185B the critical path(s) involves running a path search algorithm within a voxelized model of the geometry to produce the at least one path between the two or more specified regions. FIG. 3A shows an example of using a path search algorithm within a voxelized model to identify a critical path. In this example, the A-Star search algorithm is employed. The A-Star search algorithm uses a heuristic to explore a discrete space to obtain a path between a starting voxel and a destination voxel, balancing the amount of the domain explored with the optimality of the path obtained. In FIG. 3A, the initial state is shown at portion (a), portions (b), (c), (d) & (e) show selected snapshots of the search progression as voxels are explored. Portion (f) shows the final state, with the path identified using back-tracing.

Such pathfinding algorithms can be used to search for paths between preserves. One preserve body can be selected as the "start" of the path and another as the "end", and the discrete grid of voxels can be searched for a path that connects these two preserve bodies. The system of preserve bodies are connected if a path between each pair of preserves can be found without leaving the interior of the shape. If the system of preserve bodies is already connected by the shape, e.g., in the topology optimization loop, the pathfinding search can be restricted to only the preserve voxels and those voxels in the line skeleton, which is guaranteed to connect all the preserves.

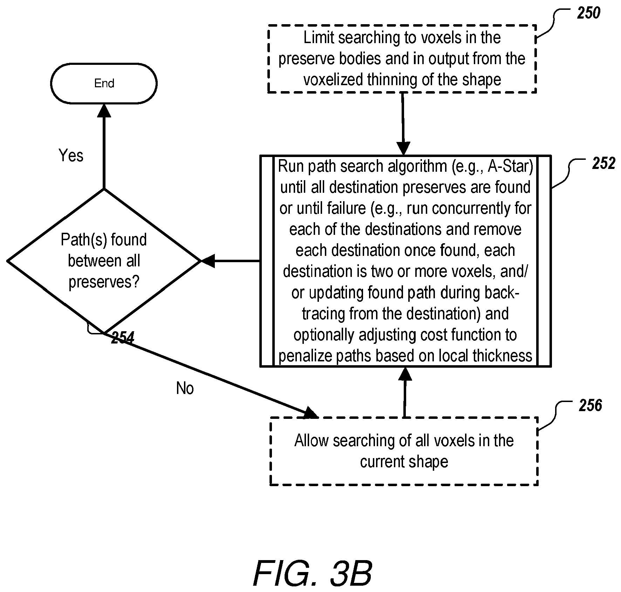

FIG. 3B shows an example of using a pathfinding algorithm to search for paths between preserves. A path search algorithm can be run 252 until all destination preserves are found. In some implementations, rather than search for paths between every pair of preserve bodies, which tends to create duplicate paths, one of the preserve bodies can be selected (e.g., the preserve body that is geometrically closest to the center of the shape) and used as the "starting preserve" from which a path to each other preserve body is found. In the case of using the A-Star search algorithm, three modifications to this algorithm can be employed.

In some implementations, the path search algorithm can be run concurrently 252 for each of two or more destinations, and a destination preserve body is them removed from the search upon reaching each respective destination preserve body. Allowing searching for multiple destinations simultaneously improves speed. The heuristic in the A-Star formulation can be updated to use the minimum of the distance from the current voxel to the centroid of each of the destination preserves. When a destination preserve is reached, back-tracing can be performed to determine the path, the path is stored, that preserve is removed from the set of destinations sought, and the search procedure continues until all preserves have been contacted or all voxels have been explored.

In some implementations, each of the destinations used in the search 252 is a set of two or more end voxels in respective ones of one or more destination preserve bodies. Thus, instead of a single start and end point, the path can be allowed to begin at any of a set of start voxels (i.e., the voxels occupied by the starting preserve), and end at any of a set of end voxels (voxels occupied by the destination preserve). Note that the heuristic in the A-Star formulation still requires a single point that approximates the destination for measuring distances; to handle this, the geometric centroid of the destination preserve can be used for measuring the distances for each end voxel in that destination preserve. Other points can also be used, such as the point in the destination preserve that is closest to the center of the shape.

In some implementations, a found path from the starting preserve body is updated 252 during back-tracing from the respective destination preserve body to the starting preserve body. In some cases, the weight field used for pathfinding is not consistent and produces non-optimal paths. To improve the quality of the paths, a refinement operation can be introduced in the back-tracing algorithm that repeatedly traverses the path, recalculates the cumulative path cost for each voxel in the path and all neighbors, and updates the path to use a new route if the new costs reveal a lower more optimal alternative path. Moreover, in some implementations, a cost function grid is employed to balance the competing objectives of staying inside the shape, taking direct paths, and avoiding traversal of thin members.

The example above focuses on using the A-Star search algorithm, but other pathfinding algorithms can be used, such as Dijkstra search. Further, each of the three modifications described above can be applied independently or together with one or both of the other modifications. Multiple voxels for a destination applies even if there is only a single path being searched. Multiple destinations can be searched even if only a single start and end voxel is defined. Backtracing with refinement is applicable when constructing a path from a set of movement costs. Thus, these search modifications are applicable to various different path search algorithms, including the A-Star search (all three), Dijkstra search (multiple destinations and multiple search), and any non-consistent heuristic used during initial graph exploration such that the path returned may not be the shortest (backtracing with refinement).

Many pathfinding algorithms, including A-Star, allow the specification of a "cost" of travel from one voxel to the next. An infinite cost indicates a voxel is impassable and should not be added to the queue. This voxel cost allocation can be used to limit the search, as in the case of avoiding obstacles for the shape overall. Further, in some implementations, the pathfinding is run in two passes, e.g., with different costs/weights. In a first pass, the path search algorithm can be limited 250 to searching voxels that are included in the preserve bodies and in the output from the voxelized thinning (all other voxels in the current shape are marked as impassable by the voxel cost allocation). This restricted search space is much faster to explore and provides an acceptable critical path if the shape is connected.

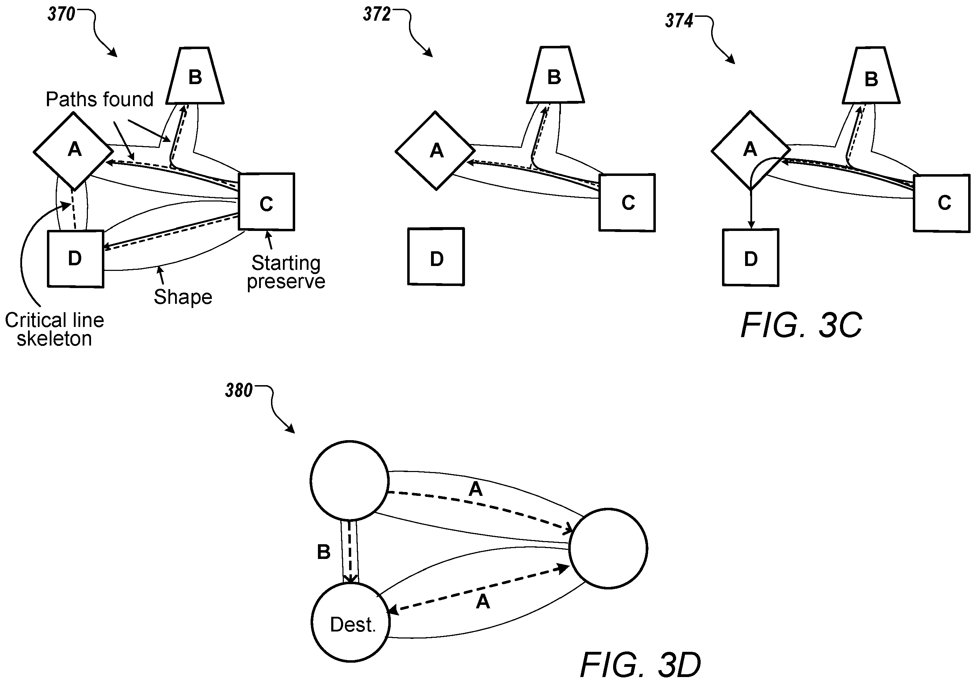

If the first pass fails 254 to find a path between a starting preserve body and all destination preserves, then a second pass search is performed that allows 256 searching of all voxels in the current shape. The cost of each voxel can be driven by a heuristic which penalizes (1) proximity to an obstacle, (2) leaving the interior of the shape, and (3) leaving the bounding box of the preserves (e.g., using the cost function grid referenced above). FIG. 3C shows an example of a two pass pathfinding search process. When Pass 1 is sufficient to connect the starting preserve to all of the ending preserves, Pass 2 is not executed and the shape is connected by the result 370 of the Pass 1 pathfinding, which connects starting preserve C to each destination preserve A, B, D along the voxelized line skeleton. If Pass 1 is not sufficient, the result 372 of Pass 1 fails to create a path to preserve D (e.g., a voxel selected is not on the interior of the shape) so the shape is declared disconnected, and Pass 2 is required. Pass 2 pathfinding can leave the voxelized line skeleton and even the shape interior, and so the result 374 of Pass 2 finds a connection with preserve D. Note that since Pass 2 type search can leave the shape interior, this type of search approach can find a path that goes around the obstacle 206 in FIG. 2A, and this path can then be used to create a shape 208 (e.g., for use as input to a topology optimization process) connecting preserves 202 when a convex hull will not work to produce a usable shape on its own. Moreover, in some implementations, the data structure used by pathfinding can be unbounded (e.g., an open voxel space) such that the path can leave the design domain (e.g., a voxel grid) used for optimization, and when such a departure from design domain occurs, the program automatically resizes the design domain to be able to represent the path found.

Nonetheless, a shortcoming of the pathfinding approach is its tendency to take a shorter path through a thinner piece of the design when a longer, thicker path is also present. This results in the shorter path being added to the critical path and preserved by the connectivity filter even though its removal would not create a disconnection. FIG. 3D shows an example 380 of this and of prioritizing some paths between preserve bodies. In FIG. 3D, path B could be selected instead of path A, because path B has lower cost than path A. But while path A is longer, path A also travels through thicker geometry and is therefore preferable, while path B is shorter but travels through thin geometry that could be removed without creating a disconnection.

To address this, in some implementations, a cost function of the path search algorithm is adjusted 252 to penalize paths based on a local thickness of the shape, e.g., as measured using the systems and techniques described above and in U.S. Publication No. 2023-0177224-A1. For example, a penalty to the cost function can be added whenever the radius of the voxelized line skeleton drops below a threshold (e.g., set to the target radius for the disconnection filter). This penalty (e.g., provided as part of the cost function grid referenced above) discourages shorter paths through thin regions of the design when longer paths through thicker regions of the design are also present. In practice, this helps, but may not fully mitigate the inclusion of sections of the design in the critical path which the optimizer might wish to remove and which could be removed without causing a disconnection to occur. To address this issue, a graph search procedure can be used.

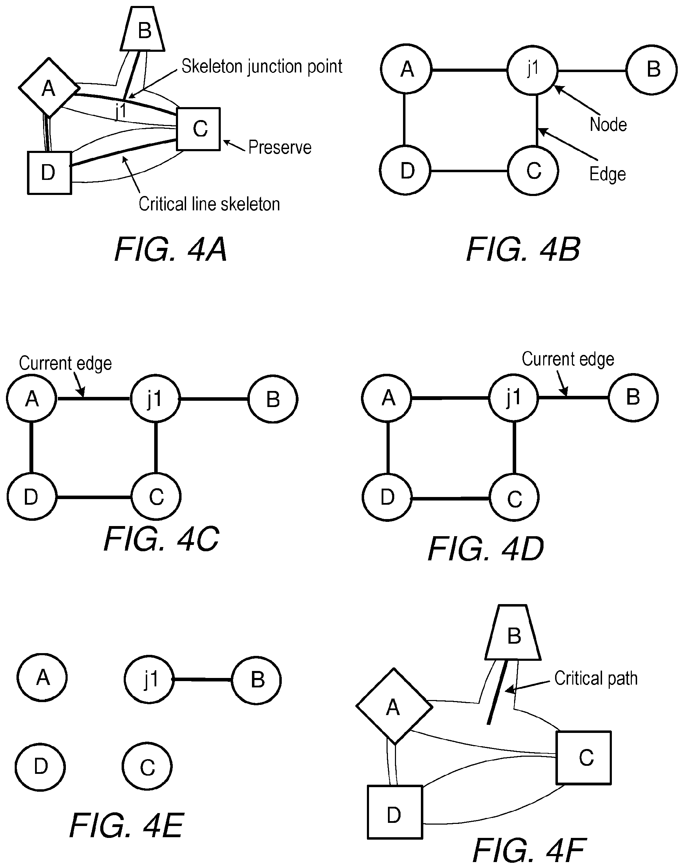

In some implementations, a graph search procedure can be used to identify the critical path from the voxelized line skeleton when the shape is connected. FIG. 4A shows an example of a physical system consisting of preserve bodies A, B, C, D and geometry connecting them, overlaid with the voxelized line skeleton. The voxelized line skeleton can be converted into a graph, where nodes represent each preserve as well as junctions in the voxelized line skeleton, and edges connect nodes where the voxelized line skeleton travels. FIG. 4B shows a graph representation of the system of FIG. 4A, with nodes as preserves and skeleton junctions.

A "disconnected graph check" routine can be defined in which whether a graph is connected, i.e., all the preserves are connected to each other is determined. For example, this can be implemented with a breadth-first search from an arbitrary preserve to all the other preserves. If the initial graph fails the disconnected graph check, the system is disconnected, and the program can fall back to using pathfinding Pass 2 to ensure a path is found to connect all the preserve bodies. In some implementations, the Pass 2 type pathfinding search can be used to provide missing edges of the graph (i.e., to patch the graph back together) before proceeding with the graph search process. Note that any geometry created by the Pass 2 pathfinding search that leaves the part interior will likely be a "bridge" edge and will persist as part of the critical path, and using the graph search process after Pass 2 type pathfinding can prevent unnecessary thickening of redundant regions of the shape when the geometry filter is activated.

In some implementations, "bridge" edges, which are required to maintain the connectivity of the preserves in the graph, can be found. For each edge in the graph, a sub-graph can be created that consists of everything except the current edge, and the disconnected graph check can be rerun. If the sub-graph is disconnected, the current edge is a bridge and therefore part of the critical path, otherwise it is not. FIG. 4C shows an example where the current edge is removed without disconnecting preserves in the sub-graph, which means this edge is not critical (the graph remains connected after the removal of this edge). In contrast, FIG. 4D gives an example of a bridge edge, an edge that is critical since the sub-graph becomes disjoint after removal of the current edge. All bridge edges can be collected into the critical path, as shown in FIG. 4E in graph form, and as shown in FIG. 4F in schematic form.

Unlike pathfinding, the "critical path" provided by the graph search algorithm may not connect all the preserves since it may be only a portion of the full critical path as a result of loops in the critical path plus preserves; the output of the graph search highlights only those regions of the shape that will cause a disconnection if they were to be removed. Thus, the critical path generated from the graph search algorithm will always be part of the at least one path that is required to keep the preserve bodies connected.

This graph search approach allows the optimizer to break loops in the line skeleton of the shape by removing portions of the shape that connect preserves but are not strictly needed to avoid a preserve disconnection. This can provide a significant reduction in the use of processing resources since the length of the path that is checked (e.g., repeatedly in the optimization loop) to prevent a disconnection is minimized. Nonetheless, the graph search approach may fail to prevent a disconnection if the optimizer decides to simultaneously remove two members of the design (e.g., the two edges connecting preserve D with preserves A and C, respectively). In practice this is very rare (almost always the separate ribs of material in the shape connecting preserves are removed one at a time), and if it does occur, the disconnection can be corrected after advection by the geometry filter described further below.

In any case, regardless of the details of how the identifying 185B is performed, the critical path connecting the preserve bodies for the shape can be processed to adjust the data values used to define the path through the shape. Thus, the producing 185 can include adjusting 185C data values of the at least one path to improve quality, and limiting 185F the thickness reduction of the shape can include using the adjusted data values to limit thickness reduction of the shape in the one or more required regions during the varying 185F of the shape of the modeled object. In some implementations, only some of the data values are adjusted 185C, rather than all the data values. The adjusting 185C can include refining data values for the portion of the voxelized line skeleton that approximates the medial axis of the shape and/or smoothing data values for the portion of the voxelized line skeleton that does not approximate the medial axis and/or smoothing data values for both portions of the voxelized line skeleton. Further, the refinement can be done for any points in the voxelized line skeleton that lie near the medial surface of the shape, even those that are not near the medial axis, and all the points in the voxelized line skeleton can be smoothed.

The centers of the voxels that approximate the medial axis are often not exactly on the medial axis of the shape. To address issue, a refinement process can be employed to generate a final set of points that more closely follow the actual medial axis. In level-set based implementations, the skeletal point locations of the voxelized line skeleton can be refined using information from the level set. In some implementations, this process involves approximating the signed distance field in the neighborhood of the skeletal voxel using linear approximations, and then finding the intersection point between the two line segments. This provides both an estimate of the location and the signed distance field value at a nearby point quite close to the medial axis (experimentally this is typically accurate to about 0.1 voxel widths).

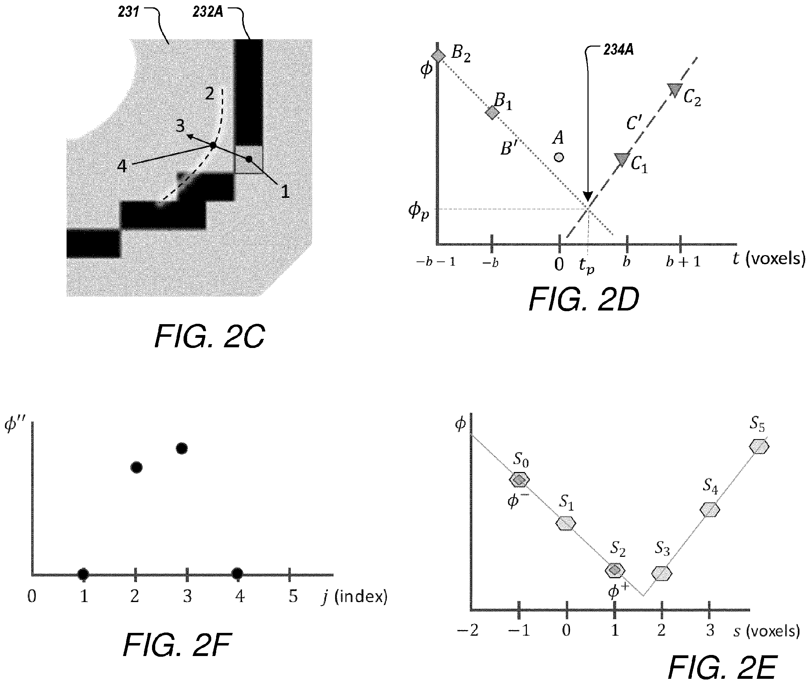

FIG. 2C shows a geometric context for ray casting and extremum estimation to refine a skeletal point to be closer to the medial axis of a 3D shape. Consider the voxelized skeleton 232A of an input shape 231. The algorithm is run once for each skeletal voxel; in this example, highlighted skeletal voxel 1 is addressed. A point that is very close to the true medial axis 2 of the input shape 231 (and as near as possible to the starting voxel) is sought. To do this, a ray can be cast in direction 3, e.g., along the upwind gradient direction, starting at the center of the voxel (or at another point in or near to the voxel, e.g., within one voxel's distance of the voxel) and proceeding toward the medial axis. The intersection point 4 of this ray and the true medial axis is the algorithm's intended output.

FIG. 2D shows a plot of the signed distance value field against distance along a gradient direction. In this plot, the x axis represents distance travelled along the ray and the Y axis is the signed distance field value $\phi$. The starting point of the ray can be the center point of the voxel (voxel 1 in FIG. 2C) and corresponds to point $A$ in FIG. 2D. Two points can be sampled along the negative gradient direction ($B_1$ and $B_2$), and two points can be sampled along the positive direction ($C_1$ and $C_2$). A line can be fit to each pair of points, forming lines $B'$ and $C'$, respectively. So long as the signed distance field is not changing too quickly, the intersection 234A between these two line segments approximates the intersection of the ray with the medial axis (point 4 in FIG. 2C). Note that point $A$ is not on one of the two lines $B'$ and $C'$ because the cast ray shoots off on a diagonal with respect to the voxel grid (not sampling actual voxels) and the data is all interpolated, which means A is not pure data, but rather some linear combination of its neighbors (note that the accuracy of trilinear interpolation is reduced near the medial axis due to the high curvature of the signed distance field, which means interpolated values near the medial axis are typically over-estimated as a result of the sampling points being on opposite sides of the medial axis). Thus, A rarely falls on one of the two lines due to the use of interpolation. The key point is that the linear interpolation allows one to get to a point that is closer to the medial axis than A is, and also to estimate the value of the signed distance field more accurately.

In some implementations, estimating the extremum value can involve searching for a change in the direction or magnitude of the upwind gradient. Note that whether a maximum or minimum value is sought will depend on whether the Y axis for the linear approximations represents the radius value (the negative of the SDF value) or the SDF value. In any case, the estimated signed distance field value $\phi_p$ provides an estimate of the thickness of the 3D model at this point. Note that the sub-voxel location is used when mapping back to the surface of the 3D model because the output points are in 3D space, not in voxel coordinates.

In some embodiments, this refinement procedure is implemented using a 1D Refinement Procedure, which is a function that takes as input the center of a voxel (on the voxelized skeleton or being a neighbor voxel thereto) from which to start the search procedure, and a direction in which to search, defined as follows:

Table 1

**Given**: Starting point xø and search direction dir, and a stepback amount b
**Find**: A point (very nearly) on the medial axis and reasonably close to x0, an estimate of its distance from the boundary, and a measure of the quality of the estimate
centerPt, deriv2 = Localize(xø, dir)
if deriv2 <= SECOND_DERIVATIVE_MINIMUM fail
peakPt, peakValue, slopeChange = Refine(centerPt, dir, b)
quality = MeasureQuality(deriv2, slopechange, peakPt, x0)
return peakPt, peakvalue, quality

The three key functions in this routine are Localize, which tries to find a voxel along the search direction as close as possible to the bottom of the valley of the signed distance field, Refine, which uses linear approximation to estimate the coordinate and distance from the boundary of the crossing of the medial axis, and MeasureQuality, which creates a quality measure for this medial axis intersection useful in subsequent steps as described later.

The Localize function can be used to address the fact that sometimes, point A in FIG. 2D is not close enough to the medial axis for the points $B_1$ & $B_2$ and $C_1$ & $C_2$ to fall on opposite sides of the medial axis crossing. For example, if point $C_1$ falls on the same side of the medial axis as both points $B_1$ and $B_2$, then the linear approximation $C'$ will not intersect the medial axis, and the intersection of the two linear approximations B' and $C'$ will not be close enough to the actual medial axis of the 3D shape (e.g., more than half a voxel away from the medial axis). This can occur in some cases as a result of discretization errors in creating the binary shape and slight irregularities in the rate of material removal in the thinning algorithm.

To address this issue, a first localization operation can be used to move from the input location along the search direction (forward or backwards) and seek to identify a voxel as near as possible to the medial axis crossing. Note that it is only required to identify one of the voxels adjacent to the medial axis crossing, i.e., identify either of the points A or $C_1$; the voxel that is the closest to the medial axis is not needed. Thus, in some implementations, the following Localize procedure is used:

<div align="center">Table 2</div>

```
Given: Starting point x0 and search direction dir
Find: A voxel center near the medial axis traveling along +/-dir starting at x0, and an estimate of the second derivative of the level set field at that point
MAX_TRAVEL = 4 voxels
plusVal = Sample(x0 + dir)
minusVal = Sample(x0 - dir)
moveDir = 1
if minusval < plusVal then
    moveDir = -1
samples = empty list of (s, value)
for p = -1 voxel; p < MAX_TRAVEL + 1 voxels; p += 1 voxel
    s = p * moveDir
    samples += {s, Sample(x0 + s * dir)}
bestDeriv2 = 0
bests = 0
for j = 1; j < len(samples) - 1; j += 1
    deriv2 = (samples[j-1].value + samples[j+1].value - 2 * samples[j].value) / (voxelsize * voxelsize)
    if deriv2 > bestDeriv2 then
        bestDeriv2 = deriv2
        bests = samples[j].s
return {x0 + dir * bestS, bestDeriv2}
```

The Localize procedure of Table 2 consists of three parts. First, the signed distance field is sampled on either side of the start point to determine which direction leads further from the shape boundary, which corresponds to a more negative signed distance field. Next, a series of samples of the signed distance field (SDF) are collected at one voxel increments along the movement direction, starting with a backwards step of one voxel in the opposite direction, and the results are stored in a list of pairs of {s value, SDF value}. Finally, the second derivative is computed, e.g., using a first order centered finite difference, and the largest second derivative value and its corresponding sample point are returned (recall that the SDF value is transitioning from a negative slope to a positive slope, so the second derivative should be large and positive near the crossing).

FIGs. 2E and 2F show this process of finding a voxel along the search direction that is as close as possible to the bottom of the valley of the signed distance field. FIG. 2E shows samples $S$ on the signed distance field along the search direction, parameterized by s. In the first step, given a starting point ($s = 0$) the process samples on either side to compute $\phi^-$ and $\phi^+$ (minusVal and plusVal, respectively, in the code). Finding that $\phi^+$ is further from the shape boundary, a positive move direction is chosen. Next, a series of samples of the signed distance field are collected along the direction dir by varying $s$ in even voxel increments (these are $Sj$ in the figure and stored as samples in the code). Note that the first sample is taken one voxel in the negative move direction (i.e., at $s = -1$).

FIG. 2F shows the values of the approximate second derivative, parameterized by the sample index j. As shown, the computed second derivatives at each point in the vector samples are plotted. Note that end points of the vector are omitted since a neighbor is needed on each side to compute a centered finite difference. The largest second derivative corresponds to sample at $j = 3$, and this second derivative value is returned from the function along with the coordinate of the corresponding point. Note that in some cases, if after localization the second derivative value is smaller than a fixed cutoff value (e.g., 0.25), then the search can be abandoned. This is typically caused by the search direction being significantly different than the gradient.

After the Localize procedure, the Refine procedure can be provided with a starting point that is located on a voxel very near to the actual medial axis intersection. From Table 1, note that the starting point argument to the Refine function is the *output* of the Localize function ($\mathbf{x}_1$) and not the center of the starting voxel ($X_0$). Search still happens along the direction dir (**d**), but from a different starting point. To remind ourselves of the change of coordinates, we will switch the independent variable from *s* to t below (both variables represent a movement of some distance along the direction vector, but from different starting points; the two are related by $t = s - (\mathbf{x}_1 - \mathbf{x}_0) \cdot \mathbf{d}$). In addition to $\mathbf{x}_1$ and **d**, the Refine function also takes an argument titled the "stepback distance" and denoted as *b*.

Line *B' is* constructed from two sampled points $B_1$ and $B_2$ to the left of the starting voxel (A), which corresponds to the voxel x_1 in Table 1, and line *C'* is constructed from two sampled points $C_1$ and $C_2$. Each pair of points is separated by the distance of a voxel size, and the first point in each set is separated from the center point *A* by the stepback distance *b*. As a result, the location of each point in *t* is,

$$
\begin{aligned}
t_{B1} &= -b \\
t_{B2} &= -b - 1 \\
t_{C1} &= b \\
t_{C2} &= b + 1.
\end{aligned}
\qquad (4)
$$

The *b* parameter is motivated by the case where **d** is not aligned with the voxel grid. In this case, every sample into the signed distance field uses trilinear interpolation, which introduces a blurring of the field values. Near the medial axis, this blurring causes a one-voxel rounding of the trough in the distance function. By choosing $b >$ voxel, we can more accurately estimate the behavior of the underlying signed distance field without seeing errors from this blurring effect. For example, *b* can be set to 1.5 voxels when **d** is not axis-aligned.

Let $m_B$ and $m_C$ denote the slopes of the lines *B'* and *C'*, respectively. We first check that the two linear approximations are not parallel by ensuring that the absolute difference between $m_B$ and $m_C$ is greater than a threshold (e.g., 0.01). If the lines are determined to be (nearly) parallel, the search fails. We compute the intersection point between these two lines. The *t* coordinate of the intersection is given by

$$
t_p = \frac{m_B t_{B1} - m_C t_{C1} + \phi_{C1} - \phi_{B1}}{m_B - m_C}
\qquad (5)
$$

in which $t_{B1}$ and $\phi_{B1}$ represent the *t* coordinate and signed distance field value at the point $B_1$. If the search succeeded, this intersection should occur within one voxel length of $t = 0$. But if the linear approximations do not reflect a reasonable shape for the signed distance field in this region, this can be detected and the search can be aborted. The value of the signed distance field at the intersection is found readily by

$$
\phi_p = \phi_{B1} + m_B(t_p - t_{B1})
\qquad (6)
$$

and likewise the 3D coordinate of the intersection is found as

$$
\mathbf{x}_p = \mathbf{x}_1 + t_p \mathbf{d}
\qquad (7)
$$

using the search starting point $\mathbf{x}_1$ and search direction **d**

A final output of the Refine routine is a measure of the change in slope between the two lines. This is computed as

$$\Delta m = \left| \frac{m_B - m_C}{1 + m_B m_C} \right|. \qquad (8)$$

In addition, in some implementations, a further refinement to this algorithm involves adjusting the locations of the points used to create the two fit lines to produce better results in regions of high curvature. In regions of high curvature, approximating each line $B'$ and $C'$ using neighboring samples ($B_1$ and $B_2$ for example) may introduce errors because the signed distance field is not well approximated by a piecewise linear formulation. In such cases, a better approximation of the line can be obtained using less data far from the medial axis crossing, e.g., by using point $A$ in place of point $B_2$ to form the line $B'$. This can be done by generating more than one line approximation on each side of the medial axis, and using the line approximation with the steeper slope.

Once the Localize and Refine routines are complete, a quality can be assigned to the medial axis point found from the search. The quality is a heuristic that tries to balance the degree to which the search direction was perpendicular to the medial axis (more perpendicular searches result in more accurate estimates of the medial axis location because of greater slope change) and the distance travelled between the starting point $\mathbf{x}_0$ and the refined medial axis approximation $\mathbf{x}_p$. This quality measure can be computed as,

$$q = \phi'' + \tan^{-1}(\Delta m) - 2q_0 \, |x_p - x_0| \qquad (9)$$

where $\phi''$ is the second derivative measure from the Localize function and $q_0$ is a constant (e.g., 0.2 divided by the voxel size).

The result of the LocalizeAndRefine routine is an estimate of the location close to the medial axis when searching along the specified search direction starting from the specified search point. The routine also returns a quality measure describing how "good" this medial point is for use in downstream computations. The search routine can fail midway if any of the following requirements are not met: (1) the largest second derivative must be greater than a specified minimum (e.g., 0.25); (2) the absolute difference in slopes between the two fit lines ($m_B$ and $m_C$) must be greater than a threshold (e.g., 0.01); and (3) the location of the medial axis point ($t_p$) found in the Refine step must be within a specified distance of the center point ($t = 0$) (one voxel). When a failure of the search routing occurs, the function returns an invalid result, and another search direction can be used for this skeletal voxel. This can be repeated until a valid result is returned.

The 3D refinement procedure can execute one or more 1D refinement procedures for a given starting skeletal voxel and select one to return as the closest & best medial axis point. The 3D refinement procedure is described in the pseudocode in Table 3.

Table 3

| |
|---|
| **Given:** Starting point x0, and a flag gradSearch indicating whether gradient search should be used |
| **Find:** A point (very nearly) on the medial axis and reasonably close to x0 and an estimate of its distance from the boundary |
| |
| candidates = empty list |
| gradient, x0new = UpwindGradient(x0) |
| candidates.insert(LocalizeAndRefine(x0new, gradient, 1.5)) |
| if len(candidates) == 0 or candidates[0] invalid: |
|         candidates.insert(LocalizeAndRefine(x0, x_direction, 1.0)) |
|         candidates.insert(LocalizeAndRefine(x0, y_direction, 1.0)) |
|         candidates.insert(LocalizeAndRefine(x0, z_direction, 1.0)) |
| |
| best = select valid candidate with largest quality, or x0 if all are invalid return best.point, best.value |

In this routine, the function UpwindGradient returns an estimate of the upwind gradient, and possibly updates the starting point for the search. A candidate is invalid if the search routine failed for any of the reasons identified in the previous section. In the second to last line, a search routine examines the list of candidate results and locates the one which has the largest measure of quality, unless all searches failed (in which case the result is the original point).

Note that the refinement of the points indicated by the voxels to be closer to the medial axis need not be limited to a one-to-one mapping of initial points to refined points, as described above. Thus, the refining of each initial point can produce two or more points that are on (or very near) the medial axis, and these additional points can then be used for thickness computations to adjust shape update to prevent disconnections, as well as to repair any disconnection using the geometry filter. For example, the search routine in the second to last line of the pseudocode in Table 3 can return all viable refined point coordinates. Moreover, the 3D refinement routine need not be called for every skeletal voxel, and the gradSearch parameter can depend on the kind of skeletal voxel being analyzed.

The refinement process described above can produce a set of sub-voxel-accurate points on the medial axis in regions of the design where the critical path is derived from pieces of the medial axis. But irrespective of whether or not this refinement process is used, the adjusting 185C can include smoothing data values for the voxelized line skeleton. In some implementations, the data values are smoothed by changing location values and/or "radius" values of the points to be an average or a median of data values from its neighbors (immediately adjacent points or all points within a predefined distance of the point) or its neighbors and itself. Other smoothing operations are also possible, such as weighting to select an influence that each neighbor should have on the weighted averaging results. Note that this smoothing of the skeletal points can improve the surface quality of the shape when these data points are used to add geometry to reconnect a disconnected preserve, yet this smoothing is optional and may not be needed in some applications. Note that the location of a point is in the coordinate system of the design space, and the "radius" of a point corresponds to half the thickness of the shape at the location, e.g., the negative of the signed distance field value at that point in the case of a level-set implementation.

Other approaches to identifying 185B the at least one path between two or more specified regions (e.g., between preserve bodies) are also possible and can work with the connectivity filtering described in detail below. Further, although the connectivity filtering described below uses the adjusted data values, this need not be the case in all implementations. Moreover, although the connectivity filtering described below uses both a velocity filter and a geometry filter, some implementations employ only one or the other of these two filters in a shape or topology optimization loop.

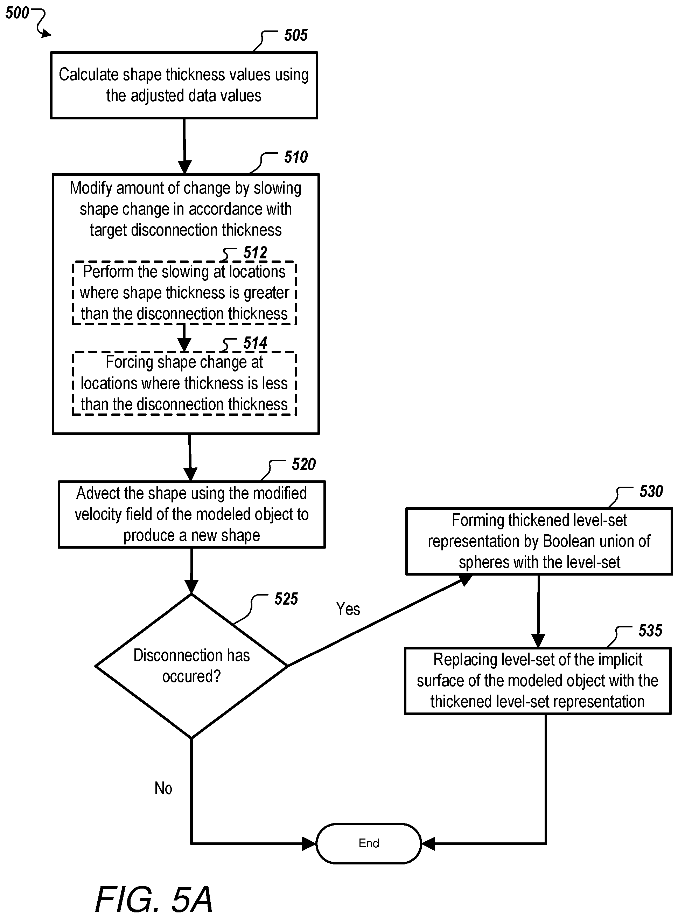

FIG. 5A shows an example of a process 500 of using adjusted data values (for an identified path) to limit thickness reduction of a shape in one or more required regions during variation of the shape of the modeled object in each of multiple iterations of an optimization loop. The process 500 is an example of varying 185F the shape of the modeled object in a topology optimization loop. Thus, the process 500 is repeated for multiple iterations of the optimization loop and has access to information specifying the at least one path.

Shape thickness values are calculated 505 for the modeled object, e.g., using the adjusted data values. For example, the shape of the modeled object can be a level-set representation of an implicit surface of the modeled object, and the calculating 505 can include forming a thickened level-set representation by performing a Boolean union of a sphere/ball (for each of the adjusted points) into a copy of the level-set representation of the implicit surface of the modeled object, and then estimating the shape thickness values based on a difference between the level-set representation of the implicit surface of the modeled object and the thickened level-set representation.

Similar to the thickness measure described here and in U.S. Publication No. 2023-0177224-A1, a pseudo-thickness measure can be created for the connectivity filter by measuring the distance between surface points and the critical path. Thus, a corrected level set is created by performing a Boolean union of a sphere/ball of fixed size around each point in the critical path to create the "corrected shape". The difference between the input level set and the corrected shape is used to approximate the "disconnection thickness" at each point on the surface.

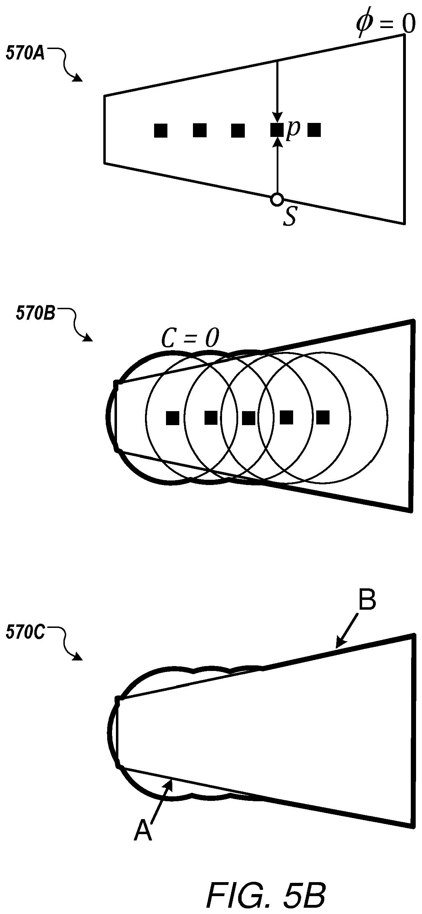

FIG. 5B shows an example of calculating shape thickness values at the surface of a 3D model 570A (represented as a simple 2D trapezoid for clarity in presentation) using a thickened level-set representation of the 3D model 570A. The thickness value at a surface point $s$ can be defined to be $2|p - s|$, where $p$ is the nearest point in the critical path. But rather than do a search to find point p, a corrected level-set representation is used, which can improve the robustness and reduce the processing time for the thickness calculations. A copy of the input 3D model 570A is made, and for each point in the critical path, a Boolean union of a sphere (centered on the point) is performed on the copy to form the thickened level-set representation 570B, where the diameter of these spheres can be set equal to the largest thickness that needs to be measured ($2r_{max}$, described later). The thickness is then computed 570C using the difference between the input level-set field $\phi$ and the corrected level-set field $C$. Note that the disconnection thickness at each point A on the surface can be measured as $t_A = 2(r_{max} - (\phi(A) - C(A)))$, where $r_{max}$ is half the largest thickness that needs to be measured, which can be different depending on which filter algorithm is in use (e.g., a target thickness for disconnection prevention by the velocity filter, or a minimum thickness for geometry added back into the shape by the geometry filter). At point B, the two level sets are the same, which indicates either the thickness at this point must be greater than or equal to $2r_{max}$ if this point is near the critical path, or else this point is far from the critical path and does not need to be constrained.

The difference between the level-set representations is computed to determine the degree to which the input level-set representation is locally thinner than the thickened level-set representation. Moreover, because the critical path likely only passes thru a small subset of the shape's various regions, e.g., the critical path identified using the graph search procedure, the corrected shape only differs from the input shape in a few places, causing most of the shape to be measured at the maximum thickness value or not at all (e.g., the check of the thickened level-set, and optionally the thickening of the level-set representation, can be limited to the identified critical path). This allows most of the shape to evolve in an unconstrained manner, while only applying the velocity filter for disconnection prevention in regions of the design which, if removed, would create a disconnection. Thus, the advection velocity is selectively adjusting in only the regions of the computer model that risk an undesirable disconnection. Likewise, the generation of geometry by the geometry filter to repair a disconnection is selectively applied in only regions of the computer model that have been undesirably disconnected.

Returning to FIG. 5A, an amount of change indicated by a current numerical assessment of the modeled object is modified 510 for use in updating a current version of the modeled object by slowing a shape change in accordance with a target disconnection thickness and the shape thickness values. The disconnection thickness measure described above can be used to filter the advection velocity provided by the optimizer before advection occurs. The objective here is to reduce or eliminate shrinking of regions along the critical path as those regions start to shrink to the point where they might disconnect. To facilitate this, a target thickness for disconnection is selected, and this forms the nominal diameter of any members which are frozen by the disconnection filter. The target thickness for disconnection can be a fixed number of voxels in implementations where the resolution of the optimization domain does not change, but in some implementations, the target thickness is selected as a fraction (e.g., 1% to 5%) of the edge of a cubic box with the same volume as the bounding box of the design, or is user specified, or a heuristic can be used to set the target thickness.

The formulation of the filter can be any of a variety of filters or constraint formulations for thickness control. In some implementations, the modifying 510 includes performing 512 the slowing (in a direction toward the target disconnection thickness) at locations in the modeled object where the shape thickness values are greater than (but within a predefined distance of) the target disconnection thickness, and the modifying 510 includes forcing 514 a shape change (in a direction toward the target disconnection thickness) at locations in the modeled object where the shape thickness values are less than the target disconnection thickness. Moreover, the slowing 512 can be performed at each of the locations by an amount that is based on a difference between a shape thickness value at the location and the target disconnection thickness, and the forcing 514 can be performed at each of the locations by an amount that is based on a difference between a shape thickness value at the location and the target disconnection thickness.

In some implementations, an "asymptotic" velocity filter is used for the disconnection filter. This velocity filter is similar to the "steady state" velocity filter in U.S. Publication No. 2023-0177224-A1, in which the velocity is manipulated at each point according to Equation 10:

$$v' = \max(\alpha v, v) + \beta \qquad (10)$$

The new velocity $v'$ is scaled and offset from the input velocity $v$ with factors $\alpha$ and $\beta$, respectively. The max($\cdot$) operator ensures that the filter never scales outward-oriented velocities (so the scaling component only applies to regions of inward velocities), and a bias term $\beta$ is added. The bias term is used to correct features which are smaller than the target thickness, and follows the same construction as in the steady-state constraint formulation. Thus, the value of $\beta$ (the additive component of the velocity filter) can be defined by a piecewise linear function that sets $\beta$ to zero when the measured thickness is greater than $t_{min}$ (which is the target disconnection thickness), sets $\beta$ to $v_p$ (which is a small outward velocity (e.g., 0.3 voxels/iteration) when the measured thickness is less than $t_{min}$ but greater than zero, and otherwise sets $\beta$ to a value between zero and $v_p$ in accordance with a linear function of the measured thickness. Thus, positive values of $\beta$ force 514 a shape change at locations in the modeled object where the shape thickness values are less than the target disconnection thickness.

However, even when the value of $\beta$ is controlled by a piecewise linear function, the value of $\alpha$ need not be. The scaling term ($\alpha$, which slows 512 shape changes) formulation can be derived by first considering an approximation of the thickness change that will result from a given scaling value: $t_{new}(\alpha) = t + \alpha v \Delta T$, where $t_{new}$ is the estimated thickness after advection as a function of the scaling component, $t$ is the current measured thickness, and $\Delta T$ is the advection time. This approximation is first-order and better estimates can be used (specifically, the effect on new thickness from the advection of the other side of this beam in the level set is ignored, as well as the potential for mismatch between the advection direction and the vector linking this surface point to the nearest point on the refined critical path).

The new thickness estimator can then be used to select $\alpha$ such that the "thickness buffer", defined as $(t) = t - t_{min}$, is reduced by a fixed amount $\Delta b$ on each iteration (experimentally, 4%). That is, $(t) - b(t_{new})/b(t) = \Delta b$, or equivalently $t - t_{new}/t - t_{min} = \Delta b$. The resulting formula for $\alpha$ is shown in Equation 11.

$$\alpha = \text{clamp}\left(\frac{\Delta b(t_{min} - t)}{\Delta T v}, 0, 1\right) \qquad (11)$$

Note that this equation is only effective when the velocity $v$ is inward (negative) and the thickness $t$ is greater than the target thickness $t_{min}$. The function clamp$(x, l, h) = \min(\max(x, l), h)$ constrains the first argument to lie between the lower and upper bounds provided in the second and third arguments.

When measuring disconnection thickness, a maximum thickness desired to measure $(t_{max})$ is specified, which should be far enough above $t_{min}$ to allow a smooth transition between $\alpha = 1$ and $\alpha = 0$. For example, for the disconnection filter $t_{max} = t_{min} + 7.0s$ can be used for the piecewise linear constraint, and $t_{max} = t_{min} + 11.0s$ can be used for the asymptotic constraint, where s is the distance between two voxels (the voxel size). In practice, $\Delta$b can be set as a fixed percentage (e.g., 4%) of $(t_{min}$-t$)$ in the in clamp() function.

In any case, regardless of how the shape change is slowed 512, and optionally reversed 514, at specific locations, the modified 510 velocity field of an implicit shape of the modeled object is used to advect 520 the shape to produce a new shape for the next iteration. However, even though the modification 510 serves to prevent disconnections, in some cases, an undesirable disconnection can still occur. Thus, in some implementations, any disconnection that has occurred along the at least one path (e.g., along the critical path) is detected 525, and a geometry filter is triggered to repair the disconnection. Unlike the velocity filter, which adjusts the shape indirectly (e.g., by manipulating the surface advection velocity) the geometry filter directly modifies the shape (e.g., the signed distance field of the shape). In topology optimization, the geometry filter can be used as a secondary filter, with the bulk of the shape adjustment being performed by the velocity filter. Thus, in some implementations, the geometry filter is only activated if a full disconnection is detected, and the geometry filter is then used to reconnect the regions of the shape so optimization can continue.

The process used to effect the geometry filter can be essentially the same as that described above in connection with FIG. 5B. The geometry filter operates by constructing the corrected level set as described above for measuring the disconnection thickness, and this corrected level set is merged with the current shape through a Boolean Union. Thus, a detected disconnection can be repaired by forming 530 a thickened level-set representation by performing a Boolean union of a sphere, for each of multiple points corresponding to the at least one path, into a copy of the level-set representation of the implicit surface of the modeled object, and replacing 535 the level-set representation of the implicit surface of the modeled object with the thickened level-set representation for the modeled object to produce the new geometry defined in the data structure for the one or more required regions.

The detection 525 can be performed in various ways, as described above. In some cases, a disconnection is defined as the presence of a voxel on the critical path which is not contained inside the shape. Further, the detection 525 can use a different version of the critical path than that used by the velocity filter, including by potentially re-identifying 185B the at least one path after the shape has been modified in order to catch and correct the case where the optimizer decides to simultaneously remove two members of the design that kept preserves connected but where not in the critical path used by the velocity filter. In some implementations, the critical path can always be re-computed when the geometry filter is running, and this can involve using a Pass 2 type pathfinding search, optionally with a graph search applied afterward. Further, in some implementations, the disconnection check for the geometry filter can be run after every iteration, or only in cases where the velocity filter detects a disconnection.

Note that the disconnection geometry filter may be rarely activated in most optimization runs where the disconnection velocity filter is enabled and active, but the disconnection geometry filter serves as a fail-safe in case some activity (non-optimization activity or a rare optimization activity) causes the shape to change such that a disconnection occurs. Moreover, as noted above, the geometry filter can also be used in preprocessing starting shapes and so can be applied to any shape represented as a level set without regard to an optimization framework. Further, other filter and constraint formulations can be used in conjunction with the critical path determination techniques described above to achieve disconnection control; the disconnection filter can be thought of as a selective minimum feature size filter.

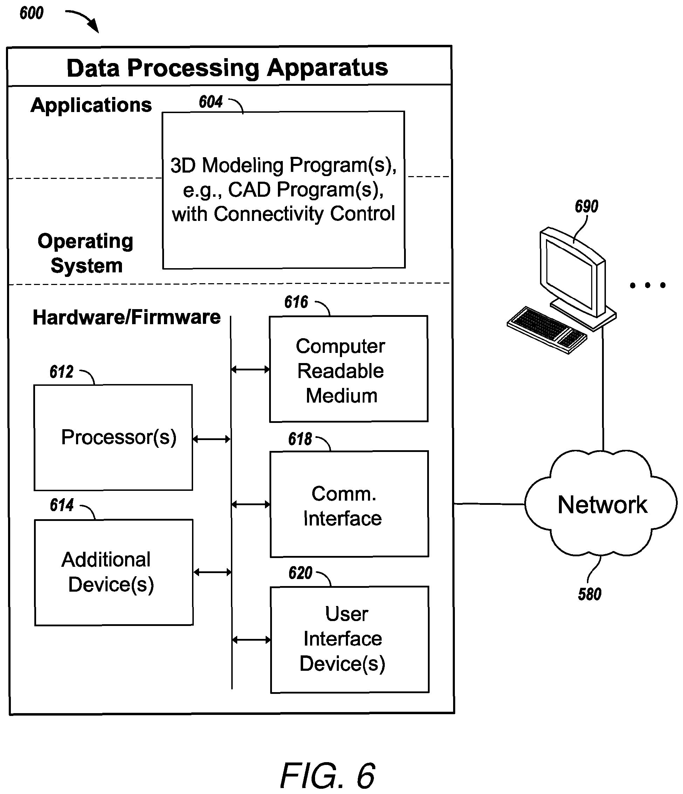

FIG. 6 is a schematic diagram of a data processing system including a data processing apparatus 600, which can be programmed as a client or as a server. The data processing apparatus 600 is connected with one or more computers 690 through a network 680. While only one computer is shown in FIG. 6 as the data processing apparatus 600, multiple computers can be used. The data processing apparatus 600 includes various software modules, which can be distributed between an applications layer and an operating system. These can include executable and/or interpretable software programs or libraries, including tools and services of one or more 3D modeling programs 604 that implement connectivity control, as described above. Thus, the 3D modeling program(s) 604 can be CAD program(s) 604 (such as CAD program(s) 116) and can implement one or more level-set based methods for shape and/or topology optimization and physical simulation operations (finite element analysis (FEA) or other) that incorporate simulation results filtering and/or geometry filtering. Further, the program(s) 604 can potentially implement manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 600 also includes hardware or firmware devices including one or more processors 612, one or more additional devices 614, a computer readable medium 616, a communication interface 618, and one or more user interface devices 620. Each processor 612 is capable of processing instructions for execution within the data processing apparatus 600. In some implementations, the processor 612 is a single or multi-threaded processor. Each processor 612 is capable of processing instructions stored on the computer readable medium 616 or on a storage device such as one of the additional devices 614. The data processing apparatus 600 uses the communication interface 618 to communicate with one or more computers 690, for example, over the network 680. Examples of user interface devices 620 include a display, a camera, a speaker, a microphone, a tactile feedback device, a keyboard, a mouse, and VR and/or AR equipment. The data processing apparatus 600 can store instructions that implement operations associated with the program(s) described above, for example, on the computer readable medium 616 or one or more additional devices 614, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. **In** addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

EMBODIMENTS

Although the present invention is defined in the claims, it should be understood that the present invention can also (alternatively) be defined in accordance with the following embodiments:

1. A method comprising:

obtaining, by a shape modeling computer program, two or more specified regions of geometry defined in a data structure used by the shape modeling computer program;
identifying, by the shape modeling computer program, at least one path between the two or more specified regions, wherein the at least one path corresponds to one or more required regions that must be included in the geometry to ensure connection between at least two of the two or more specified regions of the geometry; and
producing, by the shape modeling computer program, new geometry defined in the data structure for the one or more required regions, the new geometry produced using the at least one path.

2. The method of embodiment 1, wherein the two or more specified regions are two or more preserve bodies, the two or more preserve bodies and at least one obstacle body are specified for the geometry, and the producing comprises generating the new geometry based on the two or more preserve bodies, the at least one path, and the at least one obstacle body.

3. The method of embodiment 1, wherein the producing comprises:

performing the identifying in each of multiple iterations of an optimization loop;
varying a shape of a modeled object in each of the multiple iterations of the optimization loop, including limiting thickness reduction of the shape in at least a portion of the one or more required regions along the at least one path; and

outputting the shape of the modeled object to produce at least the new geometry defined in the data structure.

4. The method of embodiment 3, wherein the shape of the modeled object comprises a level-set representation of an implicit surface of the modeled object, the producing comprises adjusting data values of the at least one path in each of the multiple iterations of the optimization loop to produce adjusted data values for the at least one path, limiting the thickness reduction of the shape comprises using the adjusted data values to limit thickness reduction of the shape in the one or more required regions during the varying of the shape of the modeled object in each of the multiple iterations of the optimization loop, and the adjusting comprises:

for a first portion of the data values of the at least one path that correspond to a medial axis of the shape,

casting a ray from each of multiple spatial points corresponding to the first portion of the data values, and estimating an extremum of values in the level-set representation along each ray to produce an adjusted spatial point; and

for a second portion of the data values of the at least one path that do not correspond to the medial axis of the shape, smoothing spatial points corresponding to the second portion of the data values to produce adjusted spatial points.

5. The method of any of embodiments 1-4, wherein the identifying comprises thinning a voxelized model of the geometry to produce the at least one path between the two or more specified regions.

6. The method of any of embodiments 1-5, wherein the identifying comprises running a path search algorithm within a voxel space comprising a voxelized model of the geometry to produce the at least one path between the two or more specified regions, and optionally adjusting a cost function of the path search algorithm to penalize paths based on a local thickness of the shape.

7. The method of embodiment 6, wherein the path search algorithm is limited to searching voxels that are included in the two or more preserve bodies and in output from the thinning.

8. The method of embodiment 6 or embodiment 7, wherein:

the path search algorithm is run concurrently for each of one or more destinations, and the method comprises removing a destination preserve body from the search upon reaching each respective destination preserve body; each of the one or more destinations comprising a set of two or more end voxels in respective ones of one or more of the preserve bodies; and/or the method comprises updating a found path from a starting preserve body during back-tracing from the respective destination preserve body to the starting preserve body.

9. The method of embodiment 7 or embodiment 8, wherein the path search algorithm is limited to searching voxels that are included in the two or more preserve bodies and in the output from the thinning during a first pass search, and a second pass search is performed when the first pass search fails to find a path between a starting preserve body and all destination preserves.

10. The method of any of embodiments 1-5, wherein the identifying comprises searching a graph comprising nodes and edges, the nodes represent the two or more specified regions and any junctions along an initial path between the two or more specified regions, and the edges represent individual portions of the at least one path between the two or more specified region and any junctions along the initial path between the two or more specified regions.

11. The method of embodiment 10, wherein the initial path between the two or more specified regions comprises a line skeleton generated using voxelized thinning of the shape, and the method comprises falling back to running a path search algorithm within a voxel space comprising a voxelized model of the geometry to produce the at least one path between the two or more specified regions.

12. The method of any of embodiments 3-11, wherein the producing comprises adjusting data values of the at least one path in each of the multiple iterations of the optimization loop to produce adjusted data values for the at least one path, limiting the thickness reduction of the shape comprises using the adjusted data values to limit thickness reduction of the shape in the one or more required regions during the varying of the shape of the modeled object in each of the multiple iterations of the optimization loop, and using the adjusted data values to limit thickness reduction of the shape in the one or more required regions comprises:

calculating shape thickness values for the modeled object using the adjusted data values; and
modifying an amount of change to the modeled object, from numerical simulation in each of the multiple iterations of the optimization loop, by slowing a shape change in accordance with a target disconnection thickness and the shape thickness values.

13. The method of embodiment 12, wherein the shape of the modeled object comprises a level-set representation of an implicit surface of the modeled object, and the calculating comprises:

forming a thickened level-set representation by performing a Boolean union of a sphere, for each of the adjusted points, into a copy of the level-set representation of the implicit surface of the modeled object; and
estimating the shape thickness values based on a difference between the level-set representation of the implicit surface of the modeled object and the thickened level-set representation.

14. The method of embodiment 12 or embodiment 13, wherein the varying comprises varying a three-dimensional shape and topology of the modeled object in accordance with one or more design criteria, and the modifying comprises:

performing the slowing, in a direction toward the target disconnection thickness, at locations in the modeled object where the shape thickness values are greater than, but within a predefined distance of, the target disconnection thickness; and
forcing a shape change, in a direction toward the target disconnection thickness, at locations in the modeled object where the shape thickness values are less than the target disconnection thickness.

15. The method of embodiment 14, wherein the slowing is performed at each of the locations by an amount that is based on a difference between a shape thickness value at the location and the target disconnection thickness, and the forcing is performed at each of the locations by an amount that is based on a difference between a shape thickness value at the location and the target disconnection thickness.

16. The method of embodiment 14 or embodiment 15, wherein the amount used in the slowing is computed by performing operations comprising:
computing the amount used in the slowing using a fixed percentage of the difference between the shape thickness value at the location and the target disconnection thickness.

17. The method of any of embodiments 3-16, wherein the producing comprises:

determining that a thickness of the modeled object along the at least one path has dropped below an activation thickness; and
limiting the thickness reduction of the shape in at least a portion of the one or more required regions along the at least one path in response to the thickness of the modeled object along the at least one path having dropped below the activation thickness.

18. The method of embodiment 17, wherein the determining is performed in each iteration of the optimization loop up until the thickness of the modeled object along the at least one path has dropped below the activation thickness, and the multiple iterations are a proper subset of all the iterations of the optimization loop.

19. The method of any of embodiments 2-18, wherein the geometry defined in the data structure is modelled with a level-set representation of an implicit surface of a modeled object, and the producing comprises:

forming a thickened level-set representation by performing a Boolean union of a sphere, for each of multiple points corresponding to the at least one path, into a copy of the level-set representation of the implicit surface of the modeled object; and
replacing the level-set representation of the implicit surface of the modeled object with the thickened level-set representation for the modeled object to produce the new geometry defined in the data structure for the one or more required regions.

20. The method of embodiment 19, wherein the producing comprises:

detecting a disconnection has occurred along the at least one path in at least one iteration of the optimization loop; and

performing the forming and the replacing in response to detecting the disconnection.

21. A non-transitory computer-readable medium encoding a computer aided design program operable to cause one or more data processing apparatus to perform operations as recited in any of embodiments 1-20.

22. A system comprising:

one or more data processing apparatus; and
one or more non-transitory computer-readable mediums encoding instructions that are performable by the one or more data processing apparatus, the encoded instructions comprising means for filtering a velocity of changes in a shape of an object to selectively limit shrinking of the shape along a critical path to prevent a disconnection from occurring during optimization of the shape.

23. The system of embodiment 22, wherein the encoded instructions comprise means for filtering a geometry of the shape to add material to reconnect a detected disconnection.

**Claims**

1. A method comprising:

obtaining (180), by a shape modeling computer program, two or more specified regions of geometry defined in a data structure used by the shape modeling computer program for producing a computer model for an object; identifying (185B), by the shape modeling computer program and during shape and/or topology optimization of the object, at least one path between the two or more specified regions to maintain connectivity between portions of a shape of the object that is to be produced, wherein the identifying comprises running a path search algorithm within a voxel space comprising a voxelized model of the geometry to produce the at least one path between the two or more specified regions, wherein the at least one path is a proper subset of the voxelized model of the geometry, and wherein the at least one path corresponds to one or more required regions that must be included in the geometry to ensure connection between at least two of the two or more specified regions of the geometry, wherein running the path search algorithm for one or more destinations comprises:

removing a destination preserve body from the search upon reaching each respective destination preserve body, each of the one or more destinations comprising a set of two or more end voxels in respective ones of one or more preserve bodies; and/or
updating a found path from a starting preserve body during back-tracing from the respective destination preserve body to the starting preserve body;

producing (185), by the shape modeling computer program, new geometry defined in the data structure for the one or more required regions, wherein the new geometry is produced using the at least one path during the shape and/or topology optimization to reduce failures due to disconnection between portions of the shape of the object that is to be produced, wherein the new geometry is produced during the shape and/or topology optimization based on one or more design objectives, the one or more design objectives comprising one or more of: minimizing waste material, minimizing a weight of the object, or minimizing a compliance, stress, or other intrinsic property of the object; and
in response to receiving a user approval of the new geometry for the object, providing (195), by the shape modeling computer program, the computer model of the object with the new geometry for use in manufacturing a physical structure, wherein providing the computer model comprises:
generating (195A), using the computer model, a toolpath specification for a computer-controlled manufacturing system to manufacture the physical structure.

2. The method of claim 1, wherein the two or more specified regions are two or more preserve bodies, the two or more preserve bodies and at least one obstacle body are specified for the geometry, and the producing comprises generating the new geometry based on the two or more preserve bodies, the at least one path, and the at least one obstacle body.

3. The method of claim 1 or claim 2, wherein the producing comprises:

performing the identifying in each of multiple iterations of an optimization loop in a process of automated modeling or generative design with specified regions disconnection prevention;
varying a shape of a modeled object in each of the multiple iterations of the optimization loop, including limiting thickness reduction of the shape in at least a portion of the one or more required regions along the at least one path; and
outputting the shape of the modeled object to produce at least the new geometry defined in the data structure.

4. The method of claim 3, wherein the shape of the modeled object comprises a level-set representation of an implicit surface of the modeled object, wherein the producing comprises adjusting data values of the at least one path in each of the multiple iterations of the optimization loop to produce adjusted data values for the at least one path, limiting the thickness reduction of the shape comprises using the adjusted data values to limit thickness reduction of the shape in the one or more required regions during the varying of the shape of the modeled object in each of the multiple iterations of the optimization loop, and the adjusting comprises:

for a first portion of the data values of the at least one path that correspond to a medial axis of the shape,

casting a ray from each of multiple spatial points corresponding to the first portion of the data values, and estimating an extremum of values in the level-set representation along each ray to produce an adjusted spatial point; and

for a second portion of the data values of the at least one path that do not correspond to the medial axis of the shape, smoothing spatial points corresponding to the second portion of the data values to produce adjusted spatial points.

5. The method of any one of claim 1 to 4, comprising:
adjusting a cost function of the path search algorithm to penalize paths based on a local thickness of the shape.

6. The method of claim 5, wherein the path search algorithm is limited to searching voxels that are included in two or more preserve bodies and in output from performed thinning of the voxelized model, wherein the two or more specified regions are the two or more preserve bodies, wherein the two or more preserve bodies and at least one obstacle body are specified for the geometry, and the producing comprises generating the new geometry based on the two or more preserve bodies, the at least one path, and the at least one obstacle body.

7. The method of any one of claims 5 to 6, wherein the path search algorithm is limited to searching voxels that are included in two or more preserve bodies and in the output from the thinning during a first pass search, and a second pass search is performed when the first pass search fails to find a path between a starting preserve body and all destination preserves, wherein the two or more specified regions are the two or more preserve bodies, and wherein the two or more preserve bodies and at least one obstacle body are specified for the geometry, and the producing comprises generating the new geometry based on the two or more preserve bodies, the at least one path, and the at least one obstacle body.

8. The method of any of claims 1-4, wherein the identifying comprises searching a graph comprising nodes and edges, the nodes represent the two or more specified regions and any junctions along an initial path between the two or more specified regions, and the edges represent individual portions of the at least one path between the two or more specified region and any junctions along the initial path between the two or more specified regions, and
optionally, wherein the initial path between the two or more specified regions comprises a line skeleton generated using voxelized thinning of the shape, and the method comprises falling back to running a path search algorithm within a voxel space comprising the voxelized model of the geometry to produce the at least one path between the two or more specified regions.

9. The method of any of claims 3-8, wherein the producing comprises adjusting data values of the at least one path in each of the multiple iterations of the optimization loop to produce adjusted data values for the at least one path, limiting the thickness reduction of the shape comprises using the adjusted data values to limit thickness reduction of the shape in the one or more required regions during the varying of the shape of the modeled object in each of the multiple iterations of the optimization loop, and using the adjusted data values to limit thickness reduction of the shape in the one or more required regions comprises:

calculating shape thickness values for the modeled object using the adjusted data values; and
modifying an amount of change to the modeled object, from numerical simulation in each of the multiple iterations of the optimization loop, by slowing a shape change in accordance with a target disconnection thickness and the shape thickness values.

10. The method of claim 9, wherein the shape of the modeled object comprises a level-set representation of an implicit surface of the modeled object, and the calculating comprises:

forming a thickened level-set representation by performing a Boolean union of a sphere, for each of the adjusted points, into a copy of the level-set representation of the implicit surface of the modeled object; and
estimating the shape thickness values based on a difference between the level-set representation of the implicit surface of the modeled object and the thickened level-set representation.

11. The method of claim 9 or claim 10, wherein the varying comprises varying a three-dimensional shape and topology of the modeled object in accordance with one or more design criteria, and the modifying comprises:

performing the slowing, in a direction toward the target disconnection thickness, at locations in the modeled object where the shape thickness values are greater than, but within a predefined distance of, the target disconnection thickness; and
forcing a shape change, in a direction toward the target disconnection thickness, at locations in the modeled object where the shape thickness values are less than the target disconnection thickness;
and optionally, wherein the slowing is performed at each of the locations by an amount that is based on a difference between a shape thickness value at the location and the target disconnection thickness, and the forcing is performed at each of the locations by an amount that is based on a difference between a shape thickness value at the location and the target disconnection thickness.

12. The method of claim 11, wherein the one or more design criteria comprise one or more of : the one or more design objectives, one or more design constraints for the object, one or more geometric objectives for the shape, or one or more geometric constraints.

13. The method of claim 12, wherein the one or more design constraints for the object comprise one or more of: a maximum mass of the object, a maximum deflection under load of the object, or a maximum stress of the object.

14. The method of any of claims 11-13, wherein the amount used in the slowing is computed by performing operations comprising:
computing the amount used in the slowing using a fixed percentage of the difference between the shape thickness value at the location and the target disconnection thickness.

15. The method of any of claims 3-14, wherein the producing, during one or more iterations of the multiple iterations of the optimization loop, comprises:

determining whether a thickness of the modeled object along the at least one path has dropped below an activation thickness; and
limiting the thickness reduction of the shape in at least a portion of the one or more required regions along the at least one path in response to the thickness of the modeled object along the at least one path having dropped below the activation thickness;
and optionally, wherein the determining is performed in each iteration of the optimization loop up until the thickness of the modeled object along the at least one path has dropped below the activation thickness, and the multiple iterations are a proper subset of all the iterations of the optimization loop.

16. The method of any of claims 2-15, wherein the geometry defined in the data structure is modeled with a level-set representation of an implicit surface of a modeled object, and the producing comprises:

forming a thickened level-set representation by performing a Boolean union of a sphere, for each of multiple points corresponding to the at least one path, into a copy of the level-set representation of the implicit surface of the

EP 4 350 566 B1

modeled object; and

replacing the level-set representation of the implicit surface of the modeled object with the thickened level-set representation for the modeled object to produce the new geometry defined in the data structure for the one or more required regions;

and optionally, wherein the producing comprises:

detecting a disconnection has occurred along the at least one path in at least one iteration of the optimization loop; and

performing the forming and the replacing in response to detecting the disconnection.

17. A non-transitory computer-readable medium encoding a computer aided design program operable to cause one or more data processing apparatus to perform operations according to the method of any one of claims 1-16.

18. A system comprising:

one or more data processing apparatus; and

one or more non-transitory computer-readable mediums encoding instructions that, when executed by the one or more data processing apparatus, cause the one or more data processing apparatus to perform operations according to the methods of any one of claims 1-16.

**Patentansprüche**

1. Verfahren, umfassend:

Erhalten (180), durch ein Formmodellierungs-Computerprogramm, von zwei oder mehr spezifizierten Geometriebereichen, die in einer Datenstruktur definiert sind, die von dem Formmodellierungs-Computerprogramm zum Erzeugen eines Computermodells für ein Objekt verwendet wird;

Identifizieren (185B), durch das Formmodellierungs-Computerprogramm und während einer Form- und/oder Topologieoptimierung des Objekts, mindestens eines Pfades zwischen den zwei oder mehr spezifizierten Bereichen, um eine Konnektivität zwischen Abschnitten einer Form des zu erzeugenden Objekts aufrechtzuerhalten, wobei das Identifizieren ein Ausführen eines Pfadsuchalgorithmus innerhalb eines Voxelraums umfasst, der ein voxelbasiertes Modell der Geometrie umfasst, um den mindestens einen Pfad zwischen den zwei oder mehr spezifizierten Bereichen zu erzeugen, wobei der mindestens eine Pfad eine echte Teilmenge des voxelbasierten Modells der Geometrie ist, und wobei der mindestens eine Pfad einem oder mehreren erforderlichen Bereichen entspricht, die in der Geometrie enthalten sein müssen, um eine Verbindung zwischen mindestens zwei der zwei oder mehr spezifizierten Geometriebereiche sicherzustellen, wobei das Ausführen des Pfadsuchalgorithmus für ein oder mehrere Ziele umfasst:

Entfernen eines Ziel-Erhaltungskörpers aus der Suche nach Erreichen jedes jeweiligen Ziel-Erhaltungskörpers, wobei jedes des einen oder der mehreren Ziele einen Satz von zwei oder mehr Endvoxeln in jeweiligen des einen oder der mehreren Erhaltungskörper umfasst; und/oder Aktualisieren eines gefundenen Pfades von einem Start-Erhaltungskörper während einer Rückverfolgung von dem jeweiligen Ziel-Erhaltungskörper zu dem Start-Erhaltungskörper;

Erzeugen (185), durch das Formmodellierungs-Computerprogramm, einer neuen Geometrie, die in der Datenstruktur für den einen oder die mehreren erforderlichen Bereiche definiert ist, wobei die neue Geometrie unter Verwendung des mindestens einen Pfades während der Form- und/oder Topologieoptimierung erzeugt wird, um Ausfälle aufgrund einer Trennung zwischen Abschnitten der Form des zu erzeugenden Objekts zu reduzieren, wobei die neue Geometrie während der Form- und/oder Topologieoptimierung basierend auf einem oder mehreren Entwurfszielen erzeugt wird, wobei das eine oder die mehreren Entwurfsziele eines oder mehrere der folgenden umfassen: Minimieren von Materialabfall, Minimieren eines Gewichts des Objekts oder Minimieren einer Nachgiebigkeit, Spannung oder einer anderen intrinsischen Eigenschaft des Objekts; und

als Reaktion auf das Empfangen einer Benutzerzustimmung zu der neuen Geometrie für das Objekt, Bereitstellen (195), durch das Formmodellierungs-Computerprogramm, des Computermodells des Objekts mit der neuen Geometrie zur Verwendung bei der Herstellung einer physischen Struktur, wobei das Bereitstellen des Computermodells umfasst:

Generieren (195A), unter Verwendung des Computermodells, einer Werkzeugwegspezifikation für ein

30

computergesteuertes Fertigungssystem zum Herstellen der physischen Struktur.

2. Verfahren nach Anspruch 1, wobei die zwei oder mehr spezifizierten Bereiche zwei oder mehr Erhaltungskörper sind, wobei die zwei oder mehr Erhaltungskörper und mindestens ein Hinderniskörper für die Geometrie spezifiziert sind und das Erzeugen ein Generieren der neuen Geometrie basierend auf den zwei oder mehr Erhaltungskörpern, dem mindestens einen Pfad und dem mindestens einen Hinderniskörper umfasst.

3. Verfahren nach Anspruch 1 oder Anspruch 2, wobei das Erzeugen umfasst:

Durchführen des Identifizierens in jeder von mehreren Iterationen einer Optimierungsschleife in einem Prozess zur automatisierten Modellierung oder zum generativen Design mit Trennungsprävention für spezifizierte Bereiche;
Variieren einer Form eines modellierten Objekts in jeder der mehreren Iterationen der Optimierungsschleife, was ein Begrenzen einer Dickenreduzierung der Form in mindestens einem Teil des einen oder der mehreren erforderlichen Bereiche entlang des mindestens einen Pfades einschließt; und
Ausgeben der Form des modellierten Objekts, um mindestens die in der Datenstruktur definierte neue Geometrie zu erzeugen.

4. Verfahren nach Anspruch 3, wobei die Form des modellierten Objekts eine Level-Set-Darstellung einer impliziten Oberfläche des modellierten Objekts umfasst, wobei das Erzeugen ein Anpassen von Datenwerten des mindestens einen Pfades in jeder der mehreren Iterationen der Optimierungsschleife umfasst, um angepasste Datenwerte für den mindestens einen Pfad zu erzeugen, wobei das Begrenzen der Dickenreduzierung der Form ein Verwenden der angepassten Datenwerte umfasst, um die Dickenreduzierung der Form in dem einen oder den mehreren erforderlichen Bereichen während des Variierens der Form des modellierten Objekts in jeder der mehreren Iterationen der Optimierungsschleife zu begrenzen, und wobei das Anpassen umfasst:

für einen ersten Teil der Datenwerte des mindestens einen Pfades, die einer Skelettlinie der Form entsprechen, Aussenden eines Strahls von jedem von mehreren räumlichen Punkten, die dem ersten Teil der Datenwerte entsprechen, und
Schätzen eines Extremums von Werten in der Level-Set-Darstellung entlang jedes Strahls, um einen angepassten räumlichen Punkt zu erzeugen; und
für einen zweiten Teil der Datenwerte des mindestens einen Pfades, die nicht der Skelettlinie der Form entsprechen, Glätten räumlicher Punkte, die dem zweiten Teil der Datenwerte entsprechen, um angepasste räumliche Punkte zu erzeugen.

5. Verfahren nach einem der Ansprüche 1-4, umfassend:
Anpassen einer Kostenfunktion des Pfadsuchalgorithmus, um Pfade basierend auf einer lokalen Dicke der Form zu bestrafen.

6. Verfahren nach Anspruch 5, wobei der Pfadsuchalgorithmus auf das Durchsuchen von Voxeln beschränkt ist, die in zwei oder mehr Erhaltungskörpern und in einer Ausgabe einer durchgeführten Ausdünnung des voxelbasierten Modells enthalten sind, wobei die zwei oder mehr spezifizierten Bereiche die zwei oder mehr Erhaltungskörper sind, wobei die zwei oder mehr Erhaltungskörper und mindestens ein Hinderniskörper für die Geometrie spezifiziert sind und das Erzeugen ein Generieren der neuen Geometrie basierend auf den zwei oder mehr Erhaltungskörpern, dem mindestens einen Pfad und dem mindestens einen Hinderniskörper umfasst.

7. Verfahren nach einem der Ansprüche 5-6, wobei der Pfadsuchalgorithmus während eines ersten Suchlaufs auf das Durchsuchen von Voxeln beschränkt ist, die in zwei oder mehr Erhaltungskörpern und in der Ausgabe der Ausdünnung enthalten sind, und ein zweiter Suchlauf durchgeführt wird, wenn der erste Suchlauf keinen Pfad zwischen einem Start-Erhaltungskörper und allen Ziel-Erhaltungskörpern findet, wobei die zwei oder mehr spezifizierten Bereiche die zwei oder mehr Erhaltungskörper sind und wobei die zwei oder mehr Erhaltungskörper und mindestens ein Hinderniskörper für die Geometrie spezifiziert sind und das Erzeugen ein Generieren der neuen Geometrie basierend auf den zwei oder mehr Erhaltungskörpern, dem mindestens einen Pfad und dem mindestens einen Hinderniskörper umfasst.

8. Verfahren nach einem der Ansprüche 1-4, wobei das Identifizieren ein Durchsuchen eines Graphen umfasst, der Knoten und Kanten umfasst, wobei die Knoten die zwei oder mehr spezifizierten Bereiche und alle Verzweigungen entlang eines Anfangspfades zwischen den zwei oder mehr spezifizierten Bereichen darstellen und die Kanten einzelne Abschnitte des mindestens einen Pfades zwischen den zwei oder mehr spezifizierten Bereichen und allen Verzweigungen entlang des Anfangspfades zwischen den zwei oder mehr spezifizierten Bereichen darstellen, und optional, wobei der Anfangspfad zwischen den zwei oder mehr spezifizierten Bereichen ein Linienskelett umfasst, das unter Verwendung einer voxelbasierten Ausdünnung der Form generiert wurde, und das Verfahren ein Zurückgreifen auf das Ausführen eines Pfadsuchalgorithmus innerhalb eines Voxelraums umfasst, der das voxelbasierte Modell der Geometrie umfasst, um den mindestens einen Pfad zwischen den zwei oder mehr spezifizierten Bereichen zu erzeugen.

9. Verfahren nach einem der Ansprüche 3-8, wobei das Erzeugen ein Anpassen von Datenwerten des mindestens einen Pfades in jeder der mehreren Iterationen der Optimierungsschleife umfasst, um angepasste Datenwerte für den mindestens einen Pfad zu erzeugen, wobei das Begrenzen der Dickenreduzierung der Form ein Verwenden der angepassten Datenwerte umfasst, um die Dickenreduzierung der Form in dem einen oder den mehreren erforderlichen Bereichen während des Variierens der Form des modellierten Objekts in jeder der mehreren Iterationen der Optimierungsschleife zu begrenzen, und wobei das Verwenden der angepassten Datenwerte zum Begrenzen der Dickenreduzierung der Form in dem einen oder den mehreren erforderlichen Bereichen umfasst:

Berechnen von Formdickenwerten für das modellierte Objekt unter Verwendung der angepassten Datenwerte; und
Modifizieren eines Ausmaßes an Änderung an dem modellierten Objekt aus einer numerischen Simulation in jeder der mehreren Iterationen der Optimierungsschleife durch Verlangsamen einer Formänderung in Übereinstimmung mit einer Trennungs-Zieldicke und den Formdickenwerten.

10. Verfahren nach Anspruch 9, wobei die Form des modellierten Objekts eine Level-Set-Darstellung einer impliziten Oberfläche des modellierten Objekts umfasst und das Berechnen umfasst:

Bilden einer verdickten Level-Set-Darstellung durch Durchführen einer booleschen Vereinigung einer Kugel für jeden der angepassten Punkte in eine Kopie der Level-Set-Darstellung der impliziten Oberfläche des modellierten Objekts; und
Schätzen der Formdickenwerte basierend auf einer Differenz zwischen der Level-Set-Darstellung der impliziten Oberfläche des modellierten Objekts und der verdickten Level-Set-Darstellung.

11. Verfahren nach Anspruch 9 oder Anspruch 10, wobei das Variieren ein Variieren einer dreidimensionalen Form und Topologie des modellierten Objekts in Übereinstimmung mit einem oder mehreren Entwurfskriterien umfasst und das Modifizieren umfasst:

Durchführen des Verlangsamens in einer Richtung hin zur Trennungs-Zieldicke an Stellen in dem modellierten Objekt, an denen die Formdickenwerte größer als die Trennungs-Zieldicke sind, aber innerhalb eines vordefinierten Abstands zu dieser liegen; und
Erzwingen einer Formänderung in einer Richtung hin zur Trennungs-Zieldicke an Stellen in dem modellierten Objekt, an denen die Formdickenwerte geringer als die Trennungs-Zieldicke sind;
und optional, wobei das Verlangsamen an jeder der Stellen um ein Ausmaß erfolgt, das auf einer Differenz zwischen einem Formdickenwert an der Stelle und der Trennungs-Zieldicke basiert, und das Erzwingen an jeder der Stellen um ein Ausmaß erfolgt, das auf einer Differenz zwischen einem Formdickenwert an der Stelle und der Trennungs-Zieldicke basiert.

12. Verfahren nach Anspruch 11, wobei das eine oder die mehreren Entwurfskriterien eines oder mehrere der folgenden umfassen: das eine oder die mehreren Entwurfsziele, eine oder mehrere Entwurfsbeschränkungen für das Objekt, eine oder mehrere geometrische Ziele für die Form oder eine oder mehrere geometrische Beschränkungen.

13. Verfahren nach Anspruch 12, wobei die eine oder die mehreren Entwurfsbeschränkungen für das Objekt eines oder mehrere der folgenden umfassen: eine maximale Masse des Objekts, eine maximale Durchbiegung des Objekts unter Last oder eine maximale Spannung des Objekts.

14. Verfahren nach einem der Ansprüche 11-13, wobei das beim Verlangsamen verwendete Ausmaß durch Durchführen von Operationen berechnet wird, umfassend:
Berechnen des beim Verlangsamen verwendeten Ausmaßes unter Verwendung eines festen Prozentsatzes der Differenz zwischen dem Formdickenwert an der Stelle und der Trennungs-Zieldicke.

**15.** Das Verfahren nach einem der Ansprüche 3-14, wobei die Erzeugung während einer oder mehrerer Iterationen der Optimierungsschleife Folgendes umfasst:

Feststellen, ob die Dicke des modellierten Objekts entlang des mindestens einen Pfades unter eine Aktivierungsdicke gefallen ist; und

Begrenzen der Dickenreduzierung der Form in mindestens einem Teil der einen oder mehreren erforderlichen Bereiche entlang des mindestens einen Pfades als Reaktion darauf, dass die Dicke des modellierten Objekts entlang des mindestens einen Pfades unter die Aktivierungsdicke gefallen ist;

und optional, wobei die Feststellung in jeder Iteration der Optimierungsschleife durchgeführt wird, bis die Dicke des modellierten Objekts entlang des mindestens einen Pfades unter die Aktivierungsdicke gefallen ist, und die mehreren Iterationen eine echte Teilmenge aller Iterationen der Optimierungsschleife darstellen.

**16.** Verfahren nach einem der Ansprüche 2 bis 15, wobei die in der Datenstruktur definierte Geometrie mit einer Level-Set-Darstellung einer impliziten Oberfläche eines modellierten Objekts modelliert ist und das Erzeugen umfasst:

Bilden einer verdickten Level-Set-Darstellung durch Durchführen einer booleschen Vereinigung einer Kugel für jeden von mehreren Punkten, die dem mindestens einen Pfad entsprechen, in eine Kopie der Level-Set-Darstellung der impliziten Oberfläche des modellierten Objekts; und

Ersetzen der Level-Set-Darstellung der impliziten Oberfläche des modellierten Objekts durch die verdickte Level-Set-Darstellung für das modellierte Objekt, um die in der Datenstruktur definierte neue Geometrie für den einen oder die mehreren erforderlichen Bereiche zu erzeugen;

und optional, wobei das Erzeugen umfasst:

Erkennen, dass eine Trennung entlang des mindestens einen Pfades in mindestens einer Iteration der Optimierungsschleife aufgetreten ist; und

Durchführen des Bildens und des Ersetzens als Reaktion auf das Erkennen der Trennung.

**17.** Nicht-flüchtiges computerlesbares Medium, auf dem ein computergestütztes Designprogramm codiert ist, das so betreibbar ist, dass es eine oder mehrere Datenverarbeitungsvorrichtungen veranlasst, Operationen gemäß dem Verfahren nach einem der Ansprüche 1 bis 16 durchzuführen.

**18.** System, umfassend:

eine oder mehrere Datenverarbeitungsvorrichtungen; und

ein oder mehrere nicht-flüchtige computerlesbare Medien, auf denen Befehle codiert sind, die bei Ausführung durch die eine oder die mehreren Datenverarbeitungsvorrichtungen die eine oder die mehreren Datenverarbeitungsvorrichtungen veranlassen, Operationen gemäß den Verfahren nach einem der Ansprüche 1 bis 16 durchzuführen.

**Revendications**

**1.** Procédé comprenant :

l'obtention (180), par un programme informatique de modélisation de formes, de deux régions géométriques spécifiées ou plus définies dans une structure de données utilisée par le programme informatique de modélisation de formes pour produire un modèle informatique d'un objet ;

l'identification (185B), par le programme informatique de modélisation de formes et lors de l'optimisation de forme et/ou de topologie de l'objet, d'au moins un chemin entre les deux régions spécifiées ou plus pour maintenir la connectivité entre des parties d'une forme de l'objet à produire, dans lequel l'identification comprend l'exécution d'un algorithme de recherche de chemin dans un espace voxel comprenant un modèle voxelisé de la géométrie pour produire l'au moins un chemin entre les deux régions spécifiées ou plus, dans lequel l'au moins un chemin est un sous-ensemble propre du modèle voxelisé de la géométrie, et dans lequel l'au moins un chemin correspond à une ou plusieurs régions requises qui doivent être incluses dans la géométrie pour assurer la connexion entre au moins deux des deux régions spécifiées ou plus de la géométrie, dans lequel l'exécution de l'algorithme de recherche de chemin pour une ou plusieurs destinations comprend :

la suppression d'un corps préservé destination de la recherche lors de l'atteinte de chaque corps préservé de destination respectif, chacune des une ou plusieurs destinations comprenant un ensemble de deux voxels d'extrémité ou plus dans des corps respectifs d'un ou de plusieurs corps préservés ; et/ou

la mise à jour d'un chemin trouvé à partir d'un corps préservé de départ lors du retour en arrière du corps préservé de destination respectif au corps préservé de départ ;

la production (185), par le programme informatique de modélisation de formes, d'une nouvelle géométrie définie dans la structure de données pour les une ou plusieurs régions requises, dans lequel la nouvelle géométrie est produite en utilisant l'au moins un chemin pendant l'optimisation de forme et/ou de topologie pour réduire les défaillances dues à la déconnexion entre des parties de la forme de l'objet à produire, dans lequel la nouvelle géométrie est produite pendant l'optimisation de forme et/ou de topologie sur la base d'un ou de plusieurs objectifs de conception, les un ou plusieurs objectifs de conception comprenant un ou plusieurs des éléments suivants : minimiser les déchets de matière, minimiser le poids de l'objet ou minimiser la souplesse, la contrainte ou toute autre propriété intrinsèque de l'objet ; et

en réponse à la réception de l'approbation par l'utilisateur de la nouvelle géométrie de l'objet, la fourniture (195), par le programme informatique de modélisation de formes, du modèle informatique de l'objet avec la nouvelle géométrie à utiliser dans la fabrication d'une structure physique, dans lequel la fourniture du modèle informatique comprend :

la génération (195A), à l'aide du modèle informatique, d'une spécification de trajectoire d'outil pour un système de fabrication commandé par ordinateur pour fabriquer la structure physique.

2. Procédé selon la revendication 1, dans lequel les deux régions spécifiées ou plus sont deux corps préservés ou plus, les deux corps préservés ou plus et au moins un corps d'obstacle sont spécifiés pour la géométrie, et la production comprend la génération de la nouvelle géométrie sur la base des deux corps préservés ou plus, de l'au moins un chemin et de l'au moins un corps d'obstacle.

3. Procédé selon la revendication 1 ou la revendication 2, dans lequel la production comprend :

la réalisation de l'identification, dans chacune des multiples itérations d'une boucle d'optimisation dans un processus de modélisation automatisée ou de conception générative avec prévention de la déconnexion de régions spécifiées ;

la variation de la forme d'un objet modélisé dans chacune des multiples itérations de la boucle d'optimisation, y compris la limitation de la réduction d'épaisseur de la forme dans au moins une partie des une ou plusieurs régions requises le long de l'au moins un chemin ; et

la sortie de la forme de l'objet modélisé pour produire au moins la nouvelle géométrie définie dans la structure de données.

4. Procédé selon la revendication 3, dans lequel la forme de l'objet modélisé comprend une représentation par ensemble de niveaux d'une surface implicite de l'objet modélisé, dans lequel la production comprend l'ajustement de valeurs de données de l'au moins un chemin dans chacune des multiples itérations de la boucle d'optimisation pour produire des valeurs de données ajustées pour l'au moins un chemin, la limitation de la réduction d'épaisseur de la forme comprend l'utilisation des valeurs de données ajustées pour limiter la réduction d'épaisseur de la forme dans les une ou plusieurs régions requises lors de la variation de la forme de l'objet modélisé dans chacune des multiples itérations de la boucle d'optimisation, et l'ajustement comprend :

pour une première partie des valeurs de données de l'au moins un chemin qui correspondent à un axe médian de la forme,

la projection d'un rayon à partir de chacun des multiples points spatiaux correspondant à la première partie des valeurs de données, et

l'estimation d'un extremum de valeurs dans la représentation par ensemble de niveaux le long de chaque rayon pour produire un point spatial ajusté ; et

pour une seconde partie des valeurs de données de l'au moins un chemin qui ne correspondent pas à l'axe médian de la forme, le lissage des points spatiaux correspondant à la seconde partie des valeurs de données pour produire des points spatiaux ajustés.

5. Procédé selon l'une quelconque des revendications 1 à 4, comprenant :

l'ajustement d'une fonction de coût de l'algorithme de recherche de chemin pour pénaliser des chemins sur la base d'une épaisseur locale de la forme.

6. Procédé selon la revendication 5, dans lequel l'algorithme de recherche de chemin est limité à la recherche de voxels inclus dans deux corps préservés ou plus et dans la sortie de l'amincissement réalisé du modèle voxelisé, dans lequel les deux régions spécifiées ou plus sont les deux corps préservés ou plus, dans lequel les deux corps préservés ou plus et au moins un corps d'obstacle sont spécifiés pour la géométrie, et la production comprend la génération de la nouvelle géométrie sur la base des deux corps préservés ou plus, de l'au moins un chemin et de l'au moins un corps d'obstacle.

**7.** Procédé selon l'une quelconque des revendications 5 à 6, dans lequel l'algorithme de recherche de chemin est limité à la recherche de voxels inclus dans deux corps préservés ou plus et dans la sortie de l'amincissement lors d'une première recherche de passage, et une seconde recherche de passage est réalisée lorsque la première recherche de passage ne parvient pas à trouver un chemin entre un corps préservé de départ et toutes les destinations préservées, dans lequel les deux régions spécifiées ou plus sont les deux corps préservés ou plus, et dans lequel les deux corps préservés ou plus et au moins un corps d'obstacle sont spécifiés pour la géométrie, et la production comprend la génération de la nouvelle géométrie sur la base des deux corps préservés ou plus, de l'au moins un chemin et de l'au moins un corps d'obstacle.

**8.** Procédé selon l'une quelconque des revendications 1 à 4, dans lequel l'identification comprend la recherche dans un graphe comprenant des nœuds et des arêtes, les nœuds représentent les deux régions spécifiées ou plus et toutes les jonctions le long d'un chemin initial entre les deux régions spécifiées ou plus, et les arêtes représentent des parties individuelles de l'au moins un chemin entre les deux régions spécifiées ou plus et toutes les jonctions le long du chemin initial entre les deux régions spécifiées ou plus, et
éventuellement, dans lequel le chemin initial entre les deux régions spécifiées ou plus comprend un squelette linéaire généré à l'aide d'un amincissement voxelisé de la forme, et le procédé comprend le recours à un algorithme de recherche de chemin dans un espace voxelisé comprenant le modèle voxelisé de la géométrie pour produire l'au moins un chemin entre les deux régions spécifiées ou plus.

**9.** Procédé selon l'une quelconque des revendications 3 à 8, dans lequel la production comprend l'ajustement des valeurs de données de l'au moins un chemin dans chacune des multiples itérations de la boucle d'optimisation pour produire des valeurs de données ajustées pour l'au moins un chemin, la limitation de la réduction d'épaisseur de la forme comprend l'utilisation des valeurs de données ajustées pour limiter la réduction d'épaisseur de la forme dans les une ou plusieurs régions requises lors de la variation de la forme de l'objet modélisé dans chacune des multiples itérations de la boucle d'optimisation, et l'utilisation des valeurs de données ajustées pour limiter la réduction d'épaisseur de la forme dans les une ou plusieurs régions requises comprend :

le calcul de valeurs d'épaisseur de forme pour l'objet modélisé à l'aide des valeurs de données ajustées ; et
la modification de l'amplitude de la modification de l'objet modélisé, issue de la simulation numérique dans chacune des multiples itérations de la boucle d'optimisation, en ralentissant la modification de forme conformément à une épaisseur de déconnexion cible et aux valeurs d'épaisseur de forme.

**10.** Procédé selon la revendication 9, dans lequel la forme de l'objet modélisé comprend une représentation par ensemble de niveaux d'une surface implicite de l'objet modélisé, et le calcul comprend :

la formation d'une représentation par ensemble de niveaux épaissie en réalisant une union booléenne d'une sphère, pour chacun des points ajustés, en une copie de la représentation par ensemble de niveaux de la surface implicite de l'objet modélisé ; et
l'estimation des valeurs d'épaisseur de forme sur la base d'une différence entre la représentation par ensemble de niveaux de la surface implicite de l'objet modélisé et la représentation par ensemble de niveaux épaissie.

**11.** Procédé selon la revendication 9 ou la revendication 10, dans lequel la variation comprend la variation de la forme et topologie tridimensionnelles de l'objet modélisé conformément à un ou plusieurs critères de conception, et la modification comprend :

la réalisation du ralentissement, en direction de l'épaisseur de déconnexion cible, à des emplacements de l'objet modélisé où les valeurs d'épaisseur de forme sont supérieures à l'épaisseur de déconnexion cible, mais à une distance prédéfinie de celle-ci ; et
le fait d'imposer une modification de forme, en direction de l'épaisseur de déconnexion cible, à des emplacements de l'objet modélisé où les valeurs d'épaisseur de forme sont inférieures à l'épaisseur de déconnexion cible ;
et éventuellement, dans lequel le ralentissement est réalisé à chacun des emplacements d'une amplitude basée sur la différence entre la valeur d'épaisseur de forme à l'emplacement et l'épaisseur de déconnexion cible, et le fait d'imposer est réalisé à chacun des emplacements d'une amplitude basée sur la différence entre une valeur d'épaisseur de forme à l'emplacement et l'épaisseur de déconnexion cible.

12. Procédé selon la revendication 11, dans lequel les un ou plusieurs critères de conception comprennent un ou plusieurs des éléments suivants : un ou plusieurs objectifs de conception, une ou plusieurs contraintes de conception pour l'objet, un ou plusieurs objectifs géométriques pour la forme, ou une ou plusieurs contraintes géométriques.

13. Procédé selon la revendication 12, dans lequel les une ou plusieurs contraintes de conception pour l'objet comprennent une ou plusieurs des caractéristiques suivantes : une masse maximale de l'objet, une déflexion maximale sous charge de l'objet ou une contrainte maximale de l'objet.

14. Procédé selon l'une quelconque des revendications 11 à 13, dans lequel l'amplitude utilisée pour le ralentissement est calculée en réalisant des opérations comprenant :
le calcul de l'amplitude utilisée pour le ralentissement en utilisant un pourcentage fixe de la différence entre la valeur d'épaisseur de forme à l'emplacement et l'épaisseur de déconnexion cible.

15. Procédé selon l'une quelconque des revendications 3 à 14, dans lequel la production, au cours d'une ou de plusieurs itérations des multiples itérations de la boucle d'optimisation, comprend :

le fait de déterminer si l'épaisseur de l'objet modélisé le long de l'au moins un chemin est inférieure à une épaisseur d'activation ; et
la limitation de la réduction d'épaisseur de la forme dans au moins une partie des une ou plusieurs régions requises le long de l'au moins un chemin, en réponse à l'épaisseur de l'objet modélisé le long de l'au moins un chemin étant inférieure à l'épaisseur d'activation ;
et éventuellement, dans lequel le fait de déterminer est réalisé dans chaque itération de la boucle d'optimisation jusqu'à ce que l'épaisseur de l'objet modélisé le long de l'au moins un chemin soit inférieure à l'épaisseur d'activation, et les multiples itérations sont un sous-ensemble propre de toutes les itérations de la boucle d'optimisation.

16. Procédé selon l'une quelconque des revendications 2 à 15, dans lequel la géométrie définie dans la structure de données est modélisée par une représentation par ensemble de niveaux d'une surface implicite d'un objet modélisé, et la production comprend :

la formation d'une représentation par ensemble de niveaux épaissie en réalisant une union booléenne d'une sphère, pour chacun des multiples points correspondant à l'au moins un chemin, en une copie de la représentation par ensemble de niveaux de la surface implicite de l'objet modélisé ; et
le remplacement de la représentation par ensemble de niveaux de la surface implicite de l'objet modélisé par la représentation par ensemble de niveaux épaissie de l'objet modélisé pour produire la nouvelle géométrie définie dans la structure de données pour les une ou plusieurs régions requises ;
et éventuellement, dans lequel la production comprend :

la détection d'une déconnexion survenue le long de l'au moins un chemin dans au moins une itération de la boucle d'optimisation ; et
la réalisation de la formation et du remplacement en réponse à la détection de la déconnexion.

17. Support non transitoire lisible par ordinateur codant un programme de conception assistée par ordinateur pouvant être utilisé pour amener un ou plusieurs appareils de traitement de données à réaliser des opérations selon le procédé de l'une quelconque des revendications 1 à 16.

18. Système comprenant :

un ou plusieurs appareils de traitement de données ; et
un ou plusieurs supports non transitoires lisibles par ordinateur codant des instructions qui, lorsqu'elles sont exécutées par les un ou plusieurs appareils de traitement de données, amènent les un ou plusieurs appareils de traitement de données à réaliser des opérations selon les procédés de l'une quelconque des revendications 1 à 16.

FIG. 1A

Obtain specified regions of geometry (e.g., preserve bodies for TO in a design space for an object and one or more design criteria for the object) for producing a 2D or 3D model ⌐ 180

Produce new geometry (e.g., using an automated modeling or generative design process, e.g., with level-set method(s)) using at least one identified path (in regions of the shape required to connect the specified regions) in the geometry to prevent disconnections ⌐ 185

User rejects the design? ⌐ 190

Yes

No

Provide a computer model of the object with the new shape and/or topology for use in manufacturing a physical structure ⌐ 195

Generate toolpath specification(s) ⌐ 195A

Manufacture at least a portion of the physical structure ⌐ 195B

*FIG. 1B*

185A

Numerical Simulation

185B

Identify at least one path that maintains connection between regions (e.g., find voxelized line skeleton of the shape)

185C

Adjust data values of the at least one path to improve quality

185D

A thickness along the path has dropped below a minimum?

No

Yes

185F

Vary shape of the modeled object including limiting thickness reduction of the shape in a region along the path

185F-1

Modify velocity field in the region along the path

185F-2

Advect shape using modified velocity field

185E

Vary shape of the modeled object

185G

Convergence?

No

Yes

185G

Convergence?

Yes

No

185H

Provide computer model

*FIG. 1C*

FIG. 2A

FIG. 2B

*FIG. 2C*

*FIG. 2D*

*FIG. 2E*

*FIG. 2F*

(a) (b) (c) (d) (e) (f)

Start
Finish
Obstacle
Voxel in Queue
Explored Voxel
Final Path

*FIG. 3A*

End

Yes

Path(s) found between all preserves?

254

No

Limit searching to voxels in the preserve bodies and in output from the voxelized thinning of the shape

250

Run path search algorithm (e.g., A-Star) until all destination preserves are found or until failure (e.g., run concurrently for each of the destinations and remove each destination once found, each destination is two or more voxels, and/ or updating found path during back-tracing from the destination) and optionally adjusting cost function to penalize paths based on local thickness

252

Allow searching of all voxels in the current shape

256

*FIG. 3B*

370

Paths found

B

A

Starting
preserve

C

Shape

D

Critical line
skeleton

372

B

A

C

D

374

B

A

C

D

*FIG. 3C*

380

A

B

Dest.

A

*FIG. 3D*

EP 4 350 566 B1

FIG. 4A

FIG. 4B

FIG. 4C

FIG. 4D

FIG. 4E

FIG. 4F

500

505

Calculate shape thickness values using the adjusted data values

510

Modify amount of change by slowing shape change in accordance with target disconnection thickness

512

Perform the slowing at locations where shape thickness is greater than the disconnection thickness

514

Forcing shape change at locations where thickness is less than the disconnection thickness

520

Advect the shape using the modified velocity field of the modeled object to produce a new shape

530

Forming thickened level-set representation by Boolean union of spheres with the level-set

525

Disconnection has occured?

Yes

535

Replacing level-set of the implicit surface of the modeled object with the thickened level-set representation

No

End

FIG. 5A

**FIG. 5B**

**600**

## Data Processing Apparatus

**Applications**

**604**

3D Modeling Program(s), e.g., CAD Program(s), with Connectivity Control

**Operating System**

**Hardware/Firmware**

**616**

Computer Readable Medium

**612**

Processor(s)

**618**

Comm. Interface

**614**

Additional Device(s)

**620**

User Interface Device(s)

**690**

**Network**

**580**

*FIG. 6*

**EP 4 350 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 70788622

- US 20230177224 A1

### Non-patent literature cited in the description

- Building Skeleton Models via 3-D Medial Surface/Axis Thinning Algorithms. **LEE** ; **TA-CHIH** ; **KASHYAP** ; **RANGASAMI**. CVGIP: Graphical Models and Image Processing. Academic Press, Inc., 1994, vol. 56, 462-478